# EUROPÄISCHE PATENTSCHRIFT

(11) **EP 3 169 735 B1**
(45) Veröffentlichungstag und Bekanntmachung des Hinweises auf die Patenterteilung: **23.05.2018**
(21) Anmeldenummer: 15736510.7
(22) Anmeldetag: 13.07.2015
(51) Int. Cl.: C09D 11/322, C03C 8/00, C09D 11/38, C03C 3/093, C03C 8/04, C03C 17/00

(54) **KERAMISCHE TINTENSTRAHLDRUCKTINTE FÜR NIEDRIGAUSDEHNENDES GLAS UND/ODER NIEDRIGAUSDEHNENDE GLASKERAMIK UND DEREN VERWENDUNG**
CERAMIC INK JET PRINTING INK FOR LOW-EXPANSION GLASS AND/OR LOW-EXPANSION GLASS-CERAMIC AND USE THEREOF
ENCRE CÉRAMIQUE POUR IMPRIMANTE À JET D'ENCRE DESTINÉE À DU VERRE PEU DILATABLE ET/OU UNE VITROCÉRAMIQUE PEU DILATABLE ET SON UTILISATION

(30) Priorität: 14.07.2014 DE 102014010335
(43) Veröffentlichungstag der Anmeldung: 24.05.2017
(73) Patentinhaber: Schott AG, 55122 Mainz (DE)
(72) Erfinder: MIX, Christian, 55122 Mainz (DE); BOCKMEYER, Matthias, 55116 Mainz (DE); SCHWALL, Michael, 55116 Mainz (DE); WEBER, Urban, 55413 Weiler bei Bingen (DE); HERRMANN, Jochen, 55128 Mainz (DE)
(74) Vertreter: Sawodny, Michael-Wolfgang
(86) Internationale Anmeldenummer: PCT/EP2015/065976
(87) Internationale Veröffentlichungsnummer: WO 2016/008848

(56) Entgegenhaltungen:
- EP-A1- 2 233 539
- EP-A1- 2 546 208
- EP-A2- 2 684 920
- WO-A1-2005/052071
- WO-A1-2013/124506
- WO-A1-2013/131064
- WO-A1-2015/003736

## Beschreibung

Die vorliegende Erfindung betrifft eine keramische Tintenstrahldrucktinte für niedrigausdehnendes Glas und/oder niedrigausdehnende Glaskeramik und deren Verwendung.

Bekanntermaßen werden zur Dekoration von Glas- oder Glaskeramikartikeln keramische Farben verwendet, die Glasfritten und gegebenenfalls eine oder mehrere farbgebende Komponenten, wie Pigmente, sowie Füllstoffe, enthalten, die zur Verbesserung physikalischer und chemischer Eigenschaften der keramischen Farbe dienen.

Unter "Glasfritte" versteht man üblicherweise ein Zwischenprodukt bei der Herstellung von Glasschmelzen. Die Glasfritte ist ein krümelig-poröses feinkörniges Glas, welches durch das Abschrecken eines bei hohen Temperaturen erschmolzenen Rohstoffgemenges entstanden ist und anschließend fein gemahlen wird. Die Glasfritte wird als Rohstoff für die Herstellung von Emailles verwendet. Die Emaille-Herstellung erfolgt durch das Aufschmelzen der Glasfritte und zugegebener Komponenten, wie Farbpigmente oder Füllstoffe, auf ein Werkstück aus Metall oder Glas. Keramische Farben werden deshalb auch oft als Emailles oder Glasemailles bezeichnet.

Die Herstellung einer Glasfritte erfolgt durch das Erschmelzen und anschließende Abschrecken einer Glasmasse. Die erhaltene Glasfritte wird auf eine geeignete Partikelgröße, beispielsweise ≤ 20 µm, gemahlen und gegebenenfalls mit Zusatzstoffen, wie Pigmenten, Füllstoffen und dergleichen, vermischt. Das Pulver wird dann beispielsweise mit einem Suspendiermittel angepastet oder suspendiert und mittels eines geeigneten Druckverfahrens auf den zu dekorierenden Gegenstand aufgebracht. Anschließend erfolgt der Einbrennprozess, wobei die Glasfritte erweicht und einen Glasfluss auf der Trägersubstratoberfläche bildet, in dem die Zusatzstoffe eingebettet und auf dem Trägersubstrat fixiert werden. Eine ausreichende Haftung der keramischen Farbe muss damit unterhalb der Verformungstemperatur des Trägersubstrats stattfinden. Für die Dekoration von Gläsern, wie Borosilikatgläsern, ist es notwendig, niedriger schmelzende Glasfritten zu verwenden, die unterhalb von 1000°C einbrennbar sind.

Für diese niedrigen Einbrenntemperaturen ist es eine Möglichkeit, Glasfritten mit einem hohen Bleigehalt zu verwenden, der zur Senkung der Einbrenntemperatur eingesetzt wird. Die toxischen Eigenschaften von bleihaltigen Glasfritten erfordern hinsichtlich des Umgangs und der Entsorgung der mit ihnen dekorierten Produkte jedoch eine gesonderte Behandlung. Somit besteht generell ein Bedarf an bleifreien Glasfritten.

Der Schmelzbereich und die thermische Ausdehnung einer Glasfritte sind über die Form der Potenzialenergiekurve der chemischen Wechselwirkungen im Glas miteinander verknüpft. Je höher die Energieschwelle ist, die überwunden werden muss, um chemischen attraktiven Kräfte in einer Substanz aufzubrechen, desto höher ist die Schmelztemperatur und desto niedriger ist die thermische Ausdehnung dieser Substanz. Deshalb ist oft eine niedrige thermische Ausdehnung mit einer hohen Erweichungstemperatur gekoppelt. Da die chemischen Wechselwirkungen in niedrigschmelzenden Glasfritten schwächer sind, wird ein Ionenaustausch durch angreifende Substanzen erleichtert. Die chemische Beständigkeit nimmt dadurch ab. Diese Zusammenhänge führen dazu, dass sich bei Senkung des Einbrennbereichs einer Glasfritte durch die Änderung der chemischen Zusammensetzung der Glasfritte die thermische Ausdehnung erhöht und die chemische Beständigkeit verringert. Als Einbrennbereich einer Glasfritte wird der Temperaturbereich verstanden, bei dem die aufschmelzende Glasfritte in der Regel Viskositäten von 10⁴-10^{7,6} dPa s erreicht. Dieser Viskositätsbereich ermöglicht eine gute Benetzung des zu dekorierenden Trägermaterials, so dass eine gute Haftfestigkeit des Dekors gegeben ist. Niedrigere Viskositäten der keramischen Farbe würden zu unscharfen Dekoren führen und höhere zu einer unzureichenden Haftfestigkeit, so dass es vorteilhaft ist, wenn der beschriebene Viskositätsbereich eingestellt wird.

Des Weiteren ist die Biegezugfestigkeit eines dekorierten Substrats zu berücksichtigen, die vorwiegend von den sich während der Abkühlung aufbauenden Spannungen zwischen keramischer Farbe und Trägersubstrat abhängt. Die Ursachen für die Spannungen sind in der unterschiedlichen thermischen Ausdehnung und Elastizität von Trägersubstrat und keramischer Farbe begründet. Eine hohe Differenz der thermischen Ausdehnungen führt daher zur Bildung von Mikrorissen, die den Elastizitätsmodul und die Temperaturschockbeständigkeit des dekorierten Substrats deutlich senken.

Die Haftung der aufschmelzenden Glasfritte am Trägersubstrat wird durch Lösungs- und Diffusionsprozesse beim Einbrennen hervorgerufen. Dabei findet ein Ionenaustausch statt, dessen Ursache das Konzentrationsgefälle zwischen Glasfluss (aufgeschmolzene Glasfritte) und Trägersubstrat ist. Besonders Ionen mit kleinen Radien und schwacher Bindung im Glasnetzwerk, wie zum Beispiel Li⁺ oder Na⁺, diffundieren sehr schnell und tief in das Trägersubstrat ein, während große Ionen, wie Pb²⁺ oder Bi³⁺, nur sehr kurze Strecken zurücklegen. Insbesondere beeinflusst Li⁺ das Trägersubstrat sehr stark. Durch Verwendung von Li⁺-Ionen lassen sich niedrigschmelzende Glasfritten mit relativ geringen thermischen Ausdehnungen herstellen. Jedoch kann das mobile Ion beim Einbrennprozess in das Trägersubstrat diffundieren, während Na⁺ aus dem Trägersubstrat in den Glasfluss wandern kann. Dadurch wird in der Regel die thermische Ausdehnung im Trägersubstrat erniedrigt und in der Emaille erhöht.

Aufgrund der geschilderten Zusammenhänge ist es demnach schwierig eine geeignete Zusammensetzung für eine Glasfritte mit den gewünschten Eigenschaften bereitzustellen.

Zum Dekorieren von Glas und Glaskeramik sind aus dem Stand der Technik einige Verfahren bekannt geworden. Die Druckverfahren beruhen beispielsweise auf Tintensystemen. Die meisten Tinten sind entweder organische oder auch anorganische Tinten. Organische Tinten werden typischerweise für den Sieb-, Tintenstrahl- und Tampondruck eingesetzt und bestehen aus organischen Farbstoffen und Harzen zusammen mit anderen chemischen Substanzen, die im Lauf der Zeit aushärten. Üblicherweise werden die enthaltenen Harze vermischt, um dann polymerisiert zu werden. Anorganische Tinten umfassen mineralische Farbstoffe und Materialien, die nach dem Aufbringen bei hohen Temperaturen erhitzt und geschmolzen werden, damit sich diese mit der Substratoberfläche verbinden und eine permanente Bindung bilden. Die Komponenten von organischen Tinten werden bei derartig hohen Temperaturen in der Regel zu großen Teilen zu gasförmigen Bestandteilen zersetzt. Obwohl die Tinten als "anorganisch" bezeichnet werden, können diese auch kleine Mengen an organischen Materialien enthalten. Zudem können auch Sol-Gel-Binder verwendet werden, bestehend aus organischen Vorstufen, die nach dem Einbrand als anorganisches strukturgebendes Gerüst zurückbleiben.

Insbesondere der Tintenstrahldruck als Druck- oder Beschichtungstechnik hat eine Vielzahl von Vorteilen. Dieser kann Ausdrucke mit hoher Qualität bei hohen Geschwindigkeiten erzeugen. Als berührungsfreies Verfahren kann es verwendet werden, um eine Vielzahl von Trägersubstraten mit verschiedener Oberflächenbeschaffenheit zu bedrucken. Das aufzudruckende Bild wird digital gespeichert, woraus eine einfache Handhabung resultiert. Weiterhin kann der Aufdruck in einfacher Weise und schnell verändert bzw. modifiziert werden, ein Stillstand oder eine Unterbrechung zur Reinigung zwischen verschiedenen Aufdrucken ist nicht erforderlich. Der Verbrauch an Tinte wird je nach Bedarf eingestellt, so dass Verluste minimiert werden.

Es besteht daher nach wie vor ein Bedarf keramische Farben in Form von keramischen Tinten bereitzustellen, die insbesondere für niedrigausdehnende Glas und/oder Glaskeramiken geeignet sind, und im Tintenstrahldruck aufgebracht werden können. Jedoch sind die Anforderungen an die physikalisch-chemischen Eigenschaften einer derartigen Tinte aufgrund der kleinen Größe der Düsen in einem typischen Tintenstrahldruckkopf sehr hoch. Hierbei spielen die Partikelgrößen und Tintenviskosität, die Qualität von Pigment und Glasfritte eine Rolle, insbesondere um ein Blockieren bzw. Verstopfen der Düse zu verhindern und ein reibungsloses Drucken zu gewährleisten.

Eine Glasfritte ist ein amorphes Material, während die verwendeten anorganischen Pigmente häufig kristallin sind. Die Fritten sind im Allgemeinen harte Materialien mit einer hoher Abrasivität. Es besteht daher die Gefahr, dass die Düsen eines Tintenstrahldruckers abgeschliffen werden und damit verschleißen. Ein weiteres Problem ist, dass sowohl die Materialien der Glasfritte als auch die anorganischen Pigmente Materialien mit relativ hoher Dichte sind, so dass die Zusammensetzungen sich leichter entmischen und Bestandteile eher ausfallen als bei herkömmlichen Tintenstrahldrucktinten. Da die Viskosität von Tintenstrahldrucktinten in der Regel sehr niedrig ist, beispielsweise im Vergleich zu Siebdruckpasten, ist es eine Herausforderung, eine sedimetationsstabile Farbe mit einer gleichbleibenden Qualität bereitzustellen. Zudem ist es notwendig, eine Farbe bereitzustellen, die eine Thixotropie aufweist und sowohl die Anforderungen des Druckkopfes als auch an das spätere Druckbild erfüllt. Hierbei spielt besonders die hohe Kantenschärfe beim späteren Druckbild eine Rolle. Es ist daher außerordentlich schwierig, basierend auf einem Farbpulver (Glasfritte und Pigment), eine Tinte, die für den Tintenstrahldruck geeignet ist, bereitzustellen.

In der Literatur gibt es einige Vorschläge, um eine Glasfritte, die zum Teil auch für den Tintenstrahldruck eingesetzt wird, bereitzustellen:
So offenbart die DE 10 2008 052 339 A1 eine Zusammensetzung zur Herstellung einer mit Kupferverbindungen färbbaren reduzierten Oberfläche, wobei die Zusammensetzung ein Dispersionsmittel, mindestens eine Glasfritte und mindestens ein Reduktionsmittel umfasst, wobei das Reduktionsmittel bereits in der Glasfritte enthalten sein kann. Die Formulierung kann zusätzlich auch noch Additive, wie Netzmittel oder Dispergiermittel, enthalten. Das Reduktionsmittel dient zur Reduktion des Kupfers und somit zur Rotfärbung. Durch weitere Zusätze kann eine Farbverschiebung der Glasfritte erreicht werden. Der Partikeldurchmesser (d₉₀) der festen Bestandteile der Zusammensetzung beträgt höchstens 100 µm. Das Beschichtungsverfahren ist beispielsweise ein Sprühverfahren, Siebdruck, Inkjetverfahren oder ein Abziehbild. Es wird hier keine Anpassung an die Eigenschaften des Trägersubstrats in Form von Glas und/oder Glaskeramik anhand des thermischen Ausdehnungskoeffizienten (CTE, coefficient of thermal expansion) beschrieben. Zudem enthält die Zusammensetzung kein Bindemittel.

Die EP 1 840 178 A1 offenbart eine Tinte zur Dekoration von Produkten, die fertigungsbedingt eine Wärmebehandlung durchlaufen. Die Tinte wird über ein Inkjetverfahren aufgebracht. Sie besteht aus einem Feststoffanteil aus anorganischen Materialien und einem flüssigen, nicht wässrigen Anteil. Die Tinte hält Temperaturen zwischen 500 und 1.300°C stand. Der Feststoffanteil ist für die Farbgebung der aufgebrachten Tinten verantwortlich, wohingegen der flüssige Anteil der Tinte die benötigten Eigenschaften hinsichtlich der Verarbeitbarkeit bereitstellt. Die Partikelgröße der Pigmente liegt bevorzugt bei < 5 µm. Die Verarbeitbarkeit der Tinte liegt bei Temperaturen zwischen 40 und 80°C, so dass hier ein beheizbarer Druckkopf verwendet werden muss und eine Applikation bei Raumtemperatur nicht möglich ist. Die beschriebenen Eigenschaften werden durch eine spezielle Mischung aus polaren und apolaren Lösungsmittel, Dispergieradditiven und Additiven zur Stabilisierung erhalten. Eine Verwendung auf Glas und/oder Glaskeramik wird nicht erwähnt, hierfür fehlt zudem die Anpassung der Eigenschaften an das Trägersubstrat in Form von Glas und/oder Glaskeramik über den thermischen Ausdehnungskoeffizienten (CTE) sowie die Herstellung der Haftung an das Trägersubstrat durch einen aufschmelzenden Anteil

In der EP 1 928 963 B1 wird eine Inkjet-Tinte für die Bedruckung von keramischen Oberflächen und insbesondere für Glasoberflächen beschrieben. Die Tinte wird mittels Inkjetverfahren auf die Oberfläche aufgebracht und dient zur Erzeugung einer geätzt aussehenden Oberfläche. Die Tinte ist aus einem flüssigen Träger, Submicron-Partikeln einer Glasfritte mit einem Schmelzpunkt von unter 600°C und Submicron-Partikeln einer Zink-haltigen Fritte, aufgebaut aus SiO₂, ZnO und B₂O₃ oder einer Kombination mit Metalloxid-Partikeln, die einen Schmelzpunkt aufweisen, der mindestens 50°C über dem Schmelzpunkt der erstgenannten Partikel liegt, aufgebaut. Durch das Aufschmelzen der Glasfritte, nicht jedoch der höher schmelzenden nicht-gefärbten Partikel kommt es zu einer Lichtstreuung, die der Oberfläche eine geätzte Optik verleiht. Die Tinte kann auch einen organischen polymerisierbaren Binder enthalten, welcher sich unter Zugabe eines UV-Starters durch UV-Bestrahlung vernetzen lässt. Die vorgeschlagene Tinte weist einen völlig anderen Glasfluss als den erfindungsgemäßen Glasfluss auf, da die höher schmelzenden Submicron-Partikel einer Glasfritte nicht zusammen mit der anderen Glasfritte geschmolzen werden, so dass kein angepasster CTE für das Trägersubstrat erhalten wird. Zudem führen die höher schmelzenden Glaspartikel zu einer gewissen Porösität der Emaille, was zu einer rauen Oberfläche führt. Somit ist eine glatte rissfreie Beschichtung einer Glaskeramik mit dieser Tinte überhaupt nicht möglich. Diese Tinte enthält auch keine Pigmente und dient daher auch nicht zur farbgebenden Verzierung von Glas oder Glaskeramikoberflächen. Der beschriebene organische polymerisierbare Binder, welcher zur Fixierung und Formgebung der aufgedruckten Tinte bis zum Aufschmelzen der Glasfritte dient, kann nach dem Bedrucken direkt durch UV-Strahlung vernetzt werden.

Weiterhin bezieht sich die EP 2 233 539 A1 auf eine Tinte zur Bedruckung von keramischen Oberflächen und im speziellen für Glasoberflächen über ein Inkjetverfahren. Die Tinte enthält SiO₂-Nanopartikel und kann optional auch ein Pigment enthalten. Die Tinte besitzt eine Viskosität unter 20 cPs bei der Temperatur des Verdruckens, wobei diese typischerweise zwischen 35 und 45°C liegt und enthält temperaturbeständige Pigmente mit einer Partikelgröße unter 1,2 µm, ein Lösungsmittel, das bei Raumtemperatur flüssig ist und Submicron-Partikel, welche als Glasfritte dienen. Die Glasfritte ist typischerweise eine Kombination von SiO₂, Bi₂O₃ und B₂O₃. Als Lösungsmittel können organische oder wasserbasierte Mischungen dienen. Zusätzlich enthält die Tinte noch mindestens ein Dispergier- und Benetzungsadditiv. Des Weiteren beinhaltet die Tintenzusammensetzung einen organischen Binder, welcher auch über UV-Strahlung vernetzt werden kann. Bei dieser Tinte wird von einem anderen als dem erfindungsgemäßen Glasfluss ausgegangen, da die aufgebrachte Schicht hinsichtlich des CTEs für das Trägersubstrat nicht angepasst ist. Eine mit dieser Tinte bedruckte Glaskeramik würde die geforderten Produkteigenschaften nicht erfüllen.

Weiterhin beschreibt die US 2004/0018931 A1 Zusammensetzungen, die auf keramische Substrate aufgebracht werden können, wobei die Zusammensetzungen bevorzugt 11-52 Gew.-% SiO₂, 3,4-40 Gew.-% TiO₂, bis zu 75 Gew.-% Bi₂O₃, bis zu 40 Gew.-% ZnO enthalten, wobei die Summe von Bi₂O₃ und ZnO zwischen 15 und 85 Gew.-% der Zusammensetzung ausmacht. Zur Aufbringung der Zusammensetzung kann der Tintenstrahldruck Verwendung finden.

Die US 2013/0265376 A1 offenbart eine Inkjet-Tintenzusammensetzung, welche auf Glas- oder Keramikoberflächen appliziert werden kann und nach dem Einbrand zu einem glänzenden, mattierenden oder metallischem Erscheinungsbild führt. Die Tinte enthält Lösungsmittel, Dispergieradditive und anorganische Substanzen, welche eine Glasfritte und/oder kristalline Oxide sein können, die nicht farbgebend sein sollen. Keramische Pigmente sollen vorzugsweise nicht enthalten sein. Der CTE wird nicht erwähnt, so dass auch keine Schicht beschrieben wird, die eine Anpassung des CTEs auf dem Trägersubstrat ermöglicht. Eine mit dieser Tinte bedruckte Glaskeramik würde die geforderten Produkteigenschaften nicht erfüllen.

Die WO 2005/052071 A1 bezieht sich auf eine Tinte für den Digitaldruck, umfassend Partikel aus mindestens einer Glasfritte oder Metall, wobei die Partikelgröße weniger als 2 µm ist, sowie ein Medium, in dem diese Partikel dispergiert werden. Das Medium ist Wasser, Alkohol oder ein organisches Lösungsmittel. Des Weiteren kann die Tinte filmbildende Polymere, Dispergieradditive, Rheologieadditive, Entschäumer, Biozide, Haftvermittler und Farbstoffe aufweisen. Gemäß den Beispielen werden Bismut-Silikat- und Blei-Silikat-Fritten eingesetzt. Es wird hier von einem Glasfluss ausgegangen, welcher der Schicht keine Anpassung des CTEs an das Trägersubstrat ermöglicht. Somit ist keine Bedruckung einer Glaskeramik unter Erfüllung der gewünschten Produkteigenschaften mit dieser Tinte möglich. Die beschriebenen organischen polymerisierbaren Binder zersetzen sich üblicherweise bei Temperaturen zwischen 150 und 400°C, also lange bevor die Glasfritte aufschmilzt.

In der EP 2 562 144 A2 wird ein Verfahren zum Erhalt eines metallischen Effekts auf einer keramischen Basis durch Tintenstrahldruck beschrieben, wobei die Glasurformulierung aus zwei getrennten Verbindungen besteht: Einer Glasur, mit einem Teil der Oxide zum Erhalt des metallischen Effekts, die in herkömmlicher Art und Weise auf die keramische Basis aufgebracht wird, sowie einer metallischen Tinte, mit den anderen notwendigen Oxiden, die durch Tintenstrahldruck über die vorhergehende Schicht aufgebracht und mit einem Brennverfahren fertiggestellt wird. Die metallische Tinte enthält als wesentliche Bestandteile Fe₂O₃ und P₂O₅. Die Glasurzusammensetzung enthält Oxide von Si, Al, P und Li. Dieser Ansatz unterscheidet sich grundlegend von der vorliegenden Erfindung.

Ferner offenbart die US 4 004 935 eine im Wesentlichen bleifreie Glasurzusammensetzung zur Bildung einer Glasur mit einem Glanz von 9 - 55 Einheiten, gemessen bei 45° auf keramischen Artikeln, wenn bei einer Temperatur von 950 bis 1200°C gebrannt wird, umfassend eine fein verteilte Fritte, ein nicht gesintertes kristallines Siliziumoxid, Wasser und ggf. Ton, wobei die Fritte als wesentlichen Bestandteile umfasst: SiO₂: 25 - 55 Mol%, TiO₂: 7 - 20 Mol%, Alkalimetalloxide: 10 - 25 Mol%, Strontium-, Calcium- oder Magnesiumoxid: 5 - 15 Mol%, Al₂O₃: 5 - 15 Mol% und B₂O₃: 0 - 10 Mol%, wobei der Siliciumoxidgehalt der endgültigen Glasurzusammensetzung von 5 auf 28 Gew.-% SiO₂ relativ zum SiO₂-Gehalt der Fritte erhöht wird. Der Tintenstrahldruck sowie Tintenstrahldrucktinten werden nicht erwähnt.

Die WO 2013/124506 A1 bzw. die EP 2 818 523 A1 bezieht sich auf eine Tintenzusammensetzung zur Dekoration von nicht-porösen Substraten, wobei die Glasfritte hauptsächlich aus Si-, B- und Zn-Oxiden oder Si-, B-, Bi- und Zn-Oxiden und Salzen aufgebaut ist (siehe Absatz [0024]). Al₂O₃ wird als Bestandteil der Glasfritte nicht erwähnt.

Die WO 2005/052071 A1 beschreibt digitale Tintendruckzusammensetzungen, wobei als Glasfritten Wismut-Borosilikat-Glasfritten und Bleiborosilikat-Glasfritten eingesetzt werden.

Die EP 2 684 920 A2 beschäftigt sich mit einem Glaspanel, auf dem Bilder aufgedruckt sind, beispielsweise mittels Tintenstrahldruck. Die beschriebenen Glasfritten sind aus SiO₂, Bi₂O₃ und B₂O₃ zusammengesetzt (siehe Absatz [0038]), wobei in den Beispielen 1 bis 3 beispielsweise die Glasfritte JFC-004, eine Wismut-Borosilikat-Glasfritte von Johnson Matthey, beschrieben wird.

Die EP 2 546 208 A1 bezieht sich auf Zusammensetzungen, die einen geeisten Effekt (,frost appearance') nach dem Aufdrucken auf ein Glas- oder Glaskeramiksubstrat zeigen. Gemäß Absatz [0048] kann die Glasfritte Oxide von beispielsweise Silizium, Lithium, Kalium, Calcium, Aluminium, Blei, Zink, Wismut, Titan, Zirkon, Natrium, Bor, Zinn, Vanadium, Molybdän, Magnesium und andere aufweisen. In den Ausführungsformen wird die Glasfritte B5317F, d.h. eine wismuthaltige Borosilikat-Glasfritte eingesetzt (siehe auch Absatz [0080]).

Die WO 2015/003736 A1 bezieht sich auf eine keramische Inkjettinte. Die Formulierungen sind entweder wismuthaltig (siehe beispielsweise Formulierung 1 auf S. 4 und Formulierung 3 auf S. 5) oder enthalten 10 - 40 Gew.-% ZnO (siehe beispielsweise Formulierung 2 auf S. 4).

Die für eine keramische Tinte bzw. Glasfritte erwünschte niedrigere Einbrenntemperatur von < 1 000°C führt zu einer höheren thermischen Ausdehnung der Tinte bzw. Glasfritte gegenüber dem Trägersubstrat in Form von niedrigausdehnendem Glas oder Glaskeramik. Kommerziell erhältliche bleifreie keramische Tinten, insbesondere die für die Dekoration von Gläsern angebotenen, enthalten bestenfalls Glasfritten mit minimaler thermischer Ausdehnungen von etwa 6 ppm/K (= 6.10⁻⁶ K⁻¹) im Temperaturbereich von 20 bis 300°C. Jedoch weisen beispielsweise Borosilikatgläser einen thermischen Ausdehnungskoeffizienten von ca. (3 bis 4)*ppm/K auf. Durch die Differenz der thermischen Ausdehnungskoeffizienten zwischen der verwendeten Tinte bzw. pigmentierbaren Glasfritte und dem Trägersubstrat und aufgrund der auftretenden Diffusion während des Einbrennprozesses bilden sich in der keramischen Tinte während der Abkühlung Zugspannungen aus. Bei großen Zugspannungen in der keramischen Tinte kann es zur Bildung von Rissen kommen, die bis in das Trägersubstrat hinein reichen. Auch kann die keramische Tinte abplatzen, wobei große Bruchstücke an der Oberfläche des Trägersubstrats herausgerissen werden. Die Biegezugfestigkeiten dieser dekorierten Glas- oder Glaskeramikartikel sind für die meisten Anwendungen demnach völlig unzureichend.

Der vorliegenden Erfindung liegt daher die Aufgabe zugrunde, eine keramische Tinte für den Tintenstrahldruck bereitzustellen, welche die oben geschilderten Nachteile, die aus dem Stand der Technik bekannt sind, nicht oder nur in sehr untergeordnetem Maße zeigt. Diese sollte insbesondere für niedrigausdehnendes Glas und/oder niedrigausdehnende Glaskeramik geeignet sein, besonders für niedrigausdehnendes Glas und/oder niedrigausdehnende Glaskeramik mit einem thermischen Ausdehnungskoeffizient (CTE) < 5 ppm/K, insbesondere mit CTE < 4,5 ppm/K, besonders bevorzugt mit CTE < 3,4 ppm/K , und durch ihre niedrige thermische Ausdehnung und ihr niedriges Diffusionsvermögen im Vergleich mit bisher bekannten Tinten zu einer deutlichen Verringerung auftretender Spannung zwischen Tinte und Trägersubstrat führen.

Die oben geschilderte Aufgabe wird gelöst durch Bereitstellen einer keramischen Tintenstrahldrucktinte für niedrigausdehnendes Glas und/oder niedrigausdehnende Glaskeramik als Trägersubstrat, wobei das Trägersubstrat einen thermischen Ausdehnungskoeffizienten α_{sub} von < 5,0 ppm/K im Temperaturbereich von 20 bis 300°C aufweist, umfassend mindestens eine blei- und cadmiumfreie Glasfritte, mindestens ein Pigment, mindestens ein Dispersionsmittel, mindestens ein Lösungsmittel und mindestens einen Binder, wobei die Glasfritte die nachfolgende Zusammensetzung aufweist:
45 - 85 Gew.% SiO₂
2 - 20 Gew.% Al₂O₃
0 - 23 Gew.-%, bevorzugt 0 - 18 Gew.-% B₂O₃
0 Gew.-% Bi₂O₃
0 - 15 Gew.-%, bevorzugter 1 - 15 Gew.-%, noch bevorzugter 1 - 12 Gew.-%, insbesondere bevorzugt 1 - 9 Gew.-% Alkalioxide
0 - 18 Gew.-% Erdalkalioxide
0 - 7 Gew.-% ZnO
0 - 3 Gew.-% TiO₂
0 - 5 Gew.-% ZrO₂
0 - 2 Gew.-% Halogenide,
wobei eine möglichst geringe Differenz Δα = α -α_{sub} zwischen dem thermischen Ausdehnungskoeffizienten α der Glasfritte und dem thermischen Ausdehnungskoeffizienten α_{sub} des Trägersubstrats in Form von niedrigausdehnendem Glas und/oder niedrigausdehnender Glaskeramik jeweils im Temperaturbereich von 20 bis 300°C vorliegt,
wobei die Glasfritte bevorzugt einen thermischen Ausdehnungskoeffizienten von α < 6 ppm/K im Temperaturbereich von 20 bis 300°C aufweist, und bevorzugt Δα < 6 ppm/K, insbesondere bevorzugt Δα< 4 ppm/K, ganz besonders bevorzugt Δα 3 ppm/K beträgt.

Die Zusammensetzung der Glasfritte ergibt insgesamt 100 Gew.-%.

Die erfindungsgemäßen eingebrannten keramischen Tinten zeigen eine gewünscht niedrige thermische Ausdehnung und geringes Diffusionsvermögen im Vergleich mit bisher bekannten Tinten. Hierdurch werden die Spannungen zwischen einer hieraus zu erzeugenden keramischen Dekoration und einem Trägersubstrat in Form von niedrigausdehnendem Glas und/oder niedrigausdehnender Glaskeramik deutlich verringert. Somit können höhere Biegezugfestigkeiten (getestet mit Doppelringmethode nach DIN 52300, Teil 5) erreicht und ein Abplatzen der eingebrannten keramischen Tinte auf dem Trägersubstrat in Form von emaillierten Glas- oder Glaskeramikartikeln vermieden werden. Hierdurch wird eine wesentliche Verbesserung der geforderten Produkteigenschaften erreicht. Dazu zählt beispielsweise die Überprüfung der Haftfestigkeit der Emaille. Hierbei wird die eingebrannte Dekorschicht mit einem Streifen transparenten Klebefilm (Tesafilm R-Typ 104, Fa. Beiersdorf) beklebt. Der Streifen wird fest angerieben und dann ruckartig abgerissen. Die Prüfung gilt nur bei keinen oder sehr wenigen am Klebefilm anhaftenden Partikeln als bestanden. Die erfindungsgemäß bereitgestellte Tinte erfüllt diese hohen Anforderungen an die Haftfestigkeit.

Da die erfindungsgemäßen keramischen Tinten mit den Glasfritten in engem Zusammenhang stehen, gelten die vorliegend beschriebenen Angaben und Aussagen in der Regel für die keramischen Tinten und die Glasfritten gleichermaßen, auch wenn dies nicht in jedem Einzelfall erwähnt wird.

Demzufolge wird erfindungsgemäß eine keramische Tintenstrahldrucktinte, umfassend mindestens eine Glasfritte zur Herstellung von Vollflächen, besonders bevorzugt lokal strukturierter, filigraner Dekoration von niedrigausdehnenden Glas- und/oder niedrigausdehnendem Glaskeramiksubstraten, insbesondere solche auf Basis von Borosilikatglas, beispielsweise mit einem thermischen Ausdehnungskoeffizienten α < 6_{*} ppm/K im Temperaturbereich von 20 bis 300°C geeignet ist, bereitgestellt.

Besonders bevorzugt werden das Material des Trägersubstrats und die Zusammensetzung der keramischen Tinte bzw. der Glasfritte daher derart ausgewählt, dass eine möglichst geringe Differenz Δα zwischen dem thermischen Ausdehnungskoeffizienten α der Glasfritte und dem thermischen Ausdehnungskoeffizienten α_{sub} (α_{sub} = α des Substrats oder Trägermaterials) des Trägersubstrat in Form von niedrigausdehnendem Glas und/oder niedrigausdehnender Glaskeramik vorliegt, besonders bevorzugt ist: Δα < 6 ppm/K, insbesondere < 4 ppm/K, ganz besonders bevorzugt <3 ppm/K im Temperaturbereich von 20 bis 300°C. In bevorzugten Ausführungsformen der vorliegenden Erfindung kann auch ΔΔ < 2,5 ppm/K oder Δα < 2 ppm/K oder Δα < 1,5 ppm/K oder Δα < 1 ppm/K im Temperaturbereich von 20 bis 300°C erreicht werden. Erfindungsgemäß werden somit besonders bevorzugt niedrigausdehnende keramische Tinten bzw. Glasfritten (mit niedrigem thermischen Ausdehnungskoeffizienten) und niedrigausdehnende Trägersubstrate in Form von Glas und/oder Glaskeramik (mit niedrigem thermischen Ausdehnungskoeffizienten α_{sub} < 5 ppm/K im Temperaturbereich von 20 bis 300°C) kombiniert.

Der thermische Ausdehunungskoeffizient (a) der Glasfritte kann beispielsweise an Blockgussproben ermittelt werden.

Die Ausdehnungskoeffizienten, die für die keramische Tinte angegeben sind, beziehen sich stets auf die eingebrannte Tinte.

Der Ausdehnungskoeffizient kann z.B. rechnerisch aus den Ausdehnungskoeffizienten/E-Moduli der anorganischen Bestandteile ermittelt werden. Dieser kann auch durch eine Messung am eingebrannten System, z.B. unter temperaturabhängige Verbiegung oder mit Hilfe spannungsoptischen Untersuchungen, durchgeführt werden.

Die Berechnungen und Messungen sind jedoch zum Teil schwierig durchzuführen und zeitaufwändig. Daher kann als Kriterium dafür, dass der Ausdehnungskoeffizient der eingebrannten keramischen Tinte und der Ausdehnungskoeffizient von Trägersubstrat in Form von niedrigausdehnendem Glas und/oder niedrigausdehnender Glaskeramik in ausreichendem Maße aufeinander abgestimmt ist, folgende Eigenschaft der eingebrannten Tinte herangezogen werden: es werden (im Wesentlichen) keine Risse, insbesondere keine Krakelee-Risse, bei Dekorationsdicken von größer 2,5 µm im eingebrannten Zustand festgestellt, wobei das Trägersubstrat einen niedrigen Ausdehnungskoeffizienten (α_{sub}) von < 3,4 ppm/K im Temperaturbereich von 20 bis 300°C aufweist.

Durch Einbrennen der Glasfritten zusammen mit den angegeben Zusatzstoffen auf einem Trägersubstrat in Form von niedrigausdehnendem Glas und/oder niedrigausdehnender Glaskeramik können damit keramische Farben, basierend auf der Tintenstrahldrucktinte der Erfindung, mit den gewünschten Eigenschaften erhalten werden. Vorzugsweise weisen die thermischen Ausdehnungskoeffizienten α der blei- und cadmiumfreien Glasfritte bzw. der hieraus erzeugten blei- und cadmiumfreien keramischen Tinten im Temperaturbereich von 20 bis 300°C einen Wert < 6,0 ppm/K, insbesondere bevorzugt < 5,5 ppm/K, insbesondere < 5,0 ppm/K auf und liegen ganz besonders bevorzugt im Bereich von etwa 2 bis etwa 4,5 ppm/K im Temperaturbereich von 20 bis 300°C.

Wenn man eine keramische Tintenstrahldrucktinte herstellt, die aus Glasfritte und Zusatzstoffen (bevorzugt Farbpigmente, Dispersionsmittel, Lösungsmittel und Binder) besteht bzw. diese enthält, kann sich die thermische Ausdehnung der eingebrannten keramischen Tinte von der der Glasfritte entsprechend der verwendeten Zusatzstoffe unterscheiden. Der Zusatzstoff hat entsprechend seiner thermischen Ausdehnung und zugegebenen Menge ebenfalls einen Einfluss auf den thermischen Ausdehnungskoeffizienten der eingebrannten keramischen Tinte. Durch die Auswahl geeigneter Zusatzstoffe kann die thermische Ausdehnung der eingebrannten keramischen Tinte weiter abgesenkt werden.

Die Einbrandtemperatur der Tinte ändert sich nicht oder nur gering durch die Zugabe von Zusatzstoffen. Allerdings sinkt die Viskosität des reinen Glasflusses (geschmolzene Glasfritte) oberhalb der Transformationstemperatur T_{g} mit steigender Temperatur schneller als die der keramischen Tinte (Glasfritte + Zusatzstoffe). Dabei sollen unter den in der keramischen Tinte enthaltenen Zusatzstoffen thermisch stabile Komponenten verstanden werden, die während des Einbrennprozesses nicht oder nur gering in Wechselwirkung mit dem Glasfluss treten. Aus diesem Grund wird in der Regel die Einbrenntemperatur, die für eine gute Haftung der eingebrannten keramischen Tinte auf dem Trägersubstrat notwendig ist, mit zunehmendem Zusatzstoffgehalt in der keramischen Tinte erhöht.

Als Glasrohstoffe zur Herstellung der Glasfritte werden dem Fachmann bekannte Glasrohstoffe eingesetzt.

Der SiO₂-Gehalt von 45 bis 85 Gew.% in der Glaszusammensetzung ist zweckmäßig, da niedrigere Gehalte dazu führen, dass die chemische Beständigkeit zu gering ist. Gehalte > 85 Gew.-% sind nachteilig, da die Viskosität zu groß wird und die Emaille nicht mehr glatt aufschmilzt. Besonders bevorzugt beträgt der SiO₂-Gehalt 50 bis 80 Gew.-%, ganz besonders bevorzugt 55 bis 65 Gew.-%.

Al₂O₃ senkt die Kristallisationsneigung, erhöht aber die Einbrenntemperatur bei zu hohen Gehalten zu sehr, so dass in der erfindungsgemäßen Glasfritte 2 bis 20 Gew.%, bevorzugter 3 bis 19 Gew.-% Al₂O₃ vorliegen. Bevorzugt sind auch Glaszusammensetzungen, die einen Al₂O₃ > 2 Gew.-% und < 20 Gew.-% aufweisen. Besonders bevorzugt beträgt der Al₂O₃-Gehalt 5 bis 15 Gew.-%, ganz besonders bevorzugt 7 bis 15 Gew.-%.

Der B₂O₃-Gehalt beträgt 0 bis 23 Gew.-%, bevorzugt 0 - 18 Gew.%. Dies ist vorteilhaft, da die chemische Beständigkeit ausreichend bleibt und die Viskosität in der richtigen Größenordnung liegt. Glaszusammensetzungen mit B₂O₃-Gehalten > 23 Gew.-% zeigen den Nachteil, dass die chemische Beständigkeit sinkt und die Bor-Verdampfung stark zunimmt, was die Zusammensetzung verändert. Besonders bevorzugt beträgt der B₂O₃-Gehalt 4 bis 15 Gew.-%, ganz besonders bevorzugt können auch 7 bis 10 Gew.-% vorliegen.

Der Bi₂O₃-Gehalt beträgt 0 Gew.-%.

Die Alkalioxide, bevorzugt Li₂O, Na₂O und K₂O, werden in einem Bereich von 0 - 15 Gew.-%, bevorzugt 1 bis 15 Gew.-%, bevorzugter 1 bis 9 Gew.-% eingesetzt. Eine Überschreitung des Bereichs ist nachteilig, da der thermische Ausdehnungskoeffizient (CTE) zu groß wird und die Emaille vom Substrat durch zu große Zugspannungen abplatzen kann. Die Alkalioxide können aber auch gänzlich fehlen oder nur im Bereich von einigen Prozent, bspw. 1 bis < 5 Gew.-%,vorliegen. Dies hat den Vorteil, dass der CTE klein bleibt und somit eine CTE-Fehlanpassung verhindert wird. Der Alkalioxid-Gehalt kann auch im Bereich 1 bis < 8 Gew.-%, insbesondere 1 bis < 7 Gew.-%, ganz besonders bevorzugt 1 bis < 5 Gew.-% liegen.

Die Erdalkalioxide, bevorzugt CaO, BaO, MgO und SrO, werden in einem Bereich von 0 bis 18 Gew.-% eingesetzt. Eine Überschreitung des Bereichs ist nachteilig, da sowohl der CTE steigt, was zu Zugspannungen führt, als auch die Kristallisationsneigung zunimmt, was zu porösen Emaillen führt. Die Erdalkalioxide können aber auch gänzlich fehlen. Dies hat den Vorteil, dass der CTE niedrig bleibt und Kristallisation verhindert wird. Bevorzugt beträgt der Erdalkalioxid-Gehalt 0 bis 15 Gew.-%, bevorzugter 0,1 bis 10 Gew.-%, ganz besonders bevorzugt 0,5 bis 8 Gew.-%.

Nach einer bevorzugten Ausführungsform kann es zweckmäßig sein, wenn der MgO-Gehalt < 0,5 Gew.-% oder bevorzugter < 0,1 Gew.-% eingestellt wird.

Nach einer weiteren bevorzugten Ausführungsform kann es zweckmäßig sein, wenn der SrO-Gehalt < 5,0 Gew.-% oder bevorzugter ≤ 4,5 Gew.-% eingestellt wird.

Bevorzugt kann die Summe aus Alkali- und Erdalkalioxiden im Bereich von 0 bis 30 Gew.-%, bevorzugt 1 bis 25 Gew.-%, bevorzugter 1 bis 20 Gew.-%, noch bevorzugter 1 bis 15 Gew.-%, ganz besonders bevorzugt 1 bis < 10 Gew.-% eingestellt werden. Dies ist vorteilhaft, da Alkali- und Erdalkalioxide den thermischen Ausdehnungskoeffizienten erhöhen, so dass der Gehalt in der Glaszusammensetzung vorzugsweise niedrig gewählt wird.

TiO₂ und ZrO₂ erhöhen die chemische Beständigkeit und die Einbrenntemperatur der Glasfritte, so dass der Gehalt für TiO₂ nicht höher als 3 Gew.-% und für ZrO₂ nicht höher als 5 Gew.-% sein sollte. Bevorzugt wird 0,1 bis 3 Gew.-%, noch bevorzugter 0,1 bis 2 Gew.-% TiO₂ eingesetzt. Bevorzugt wird 0,1 bis 2 Gew.-%, noch bevorzugter 0,1 bis 1 Gew.-% ZrO₂ eingesetzt.

Zinkoxid dient in der Glasfritte dazu, die Einbrenntemperatur zu senken und wird in Gehalten von 0 bis 7 Gew.-% eingesetzt. Bei Überschreitung der oberen Grenze ist nachteilig, dass die chemische Beständigkeit gesenkt wird und die Zn-Verdampfung zu stark wird, was zur Veränderung der Glaszusammensetzung führt und die Eigenschaften der Emaille verändert. Nach einer bevorzugten Ausführungsform kann ein ZnO-Gehalt > 0 Gew.-% vorteilhaft sein, da die Einbrenntemperatur gesenkt wird, ohne den CTE zu erhöhen. Besonders bevorzugt beträgt der ZnO-Gehalt 0,1 bis 5 Gew.-%, noch bevorzugter 0,1 bis 2,5 Gew.-%.

Der Halogenid-Gehalt in der Glasfritte, beispielsweise Chlorid, Bromid und/oder Fluorid, sollte 2 Gew.-% nicht übersteigen, da die chemische Beständigkeit ansonsten abnimmt. Bevorzugt wird ein Halogenid-Gehalt in der Glaszusammensetzung jedoch gänzlich vermieden.

Die oben beschriebenen Glasfritten sind im Wesentlichen frei von unerwünschten Komponenten, wie PbO und CdO, d.h. diese Verbindungen sind bis auf unvermeidbare Verunreinigungsgehalte nicht vorhanden. Vorzugsweise nicht enthalten sind weiterhin P₂O₅, Ta₂O₅, Phosphat und Vanadium (V₂O₅).

Die erfindungsgemäß verwendete Glasfritte weist vorzugsweise einen Erweichungspunkt im Bereich von 500 bis 900 °C auf.

Zusätzlich können farbgebene Oxide, wie CuO, CoO, Fe₂O₃ und MnO, zur Färbung der Glasfritte eingesetzt werden, wodurch eine vorgefärbte Glasfritte erhalten wird. Eine "vorgefärbte" Glasfritte bedeutet im Rahmen der Erfindung, dass die verwendete Glasfritte bereits eine ausgewählte und definiert eingestellte Farbe aufweist. Der Begriff "Farbe" bzw. "gefärbt" soll hier möglichst weit verstanden werden und jede dem Fachmann bekannte Färbung einschließen. Auch weiß soll als Farbe verstanden werden. Die vorgefärbte Glasfritte kann undurchsichtig, durchscheinend oder transparent sein. Übergänge zwischen den geschilderten Zuständen sind ebenfalls möglich.

Durch eine geeignete Pigmentierung einer vorgefärbten Glasfritte lassen sich bereits mit relativ niedrigen Pigmentgehalten schwarze keramische Farben herstellen, die nach dem Einbrennprozess bei geringen Schichtdicken, zum Beispiel von 0,5 bis 10 µm, ein ausgezeichnetes Deckvermögen auf Glas und/oder Glaskeramik aufweisen. Der Pigmentgehalt liegt für die Herstellung einer keramischen Tinte bzw. Farbe, beispielsweise einer schwarzen keramischen Tinte bzw. Farbe, bevorzugt im Bereich von etwa 0,1 bis etwa 40 Vol.-%, bevorzugt bei etwa 5 bis 40 Vol% und besonders bevorzugt bei 15 bis 40 Vol%.

Eine vorgefärbte Glasfritte ist jedoch nur im Einzelfall erfindungsgemäß bevorzugt. Erfindungsgemäß bevorzugt werden im Gegensatz zu einer vorgefärbten Glasfritte jedoch Glasfritten eingesetzt, die nicht vorgefärbt sind, d.h. farblose Glasfritten. Die Färbung der eingebrannten keramischen Tinte wird in der vorliegenden Erfindung durch Zusatz von ein oder mehreren Pigmenten erhalten.

Die eingebrannte keramische Tintenstrahldrucktinte wird erfindungsgemäß durch Verwendung zumindest eines Pigments gefärbt. Jedes dem Fachmann für die Verwendung bekannte Pigment kann eingesetzt werden. Bevorzugt wird das Pigment/ werden die Pigmente ausgewählt aus der Gruppe der farbigen und farblosen anorganischen oxidischen Verbindungen, beispielsweise aus Oxiden und/oder Spinellen, insbesondere Titanoxid (TiO₂), Ceroxid, Baddeleyit (ZrO₂), Cobalt-Oxiden / -Spinellen, wie Cobalt-Aluminium-Spinellen, Cobalt-Titan-Spinellen, Cobalt-Chrom-Spinellen, Cobalt-Nickel-Mangan-Eisen-Chrom-Oxiden /-Spinellen, Cobalt-Nickel-Zink-Titan-Aluminium-Oxiden /-Spinellen, Eisen-Oxiden, Eisen-Chrom-Oxiden, wie dotiertem Hämatit (Fe₂O₃ : Cr), Eisen-Chrom-Zinn-Titan-Oxiden, Kupfer-Chrom-Spinellen, wie CuCr₂O₄, Nickel-Chrom-Antimon-Titan-Oxiden, Titan-Oxiden, Zirkon-Silizium-Eisen-Oxiden /-Spinellen, wie dotiertem Zirkon (ZrSiO₄ : Pr, V, Fe)) und Mischungen dieser.

Als Pigmente kommen auch alle denkbaren Absorptionspigmente in Betracht, insbesondere plättchen- oder stäbchenformige Pigmente. Auch ist es möglich, Effektpigmente, insbesondere beschichtete Effektpigmente zu verwenden.

Weiterhin können der Schicht auch Füllstoffe hinzugesetzt werden, dies können insbesondere sein: SiOx-Partikel, Alumina-Partikel, pyrogene, Kieselsauren, Kalk-Natron-, Alkali-Alumosilicat- od. Borosilikatglaskugeln, Glashohlkugeln.

Erfindungsgemäß kann ein großer Bereich an Dispersionsmitteln eingesetzt werden. Diese sind beispielsweise ausgewählt aus der Gruppe, bestehend aus Lecithin, Posphorsäureestern, Aminsalzen, Polyesterstyrolharzen, Xylen, Castoröl, 3-Acryloxypropyltrimethoxysilan, Polycarbonsäuren, Polycarbonsäurepolyestern, Polyacrylaten, Polyamiden, Polyaminamiden, Estern, mikronisiertem Polyethylenwachs, Polyethylenglykol, Silikonen, Alkoxysilanen, Hybridpolymeren, organisch modifizierten Metallalkoxiden, hochmolekularen Copolymeren mit pigmentaffinen Gruppen, Blockcopolymeren, Pfropfcopolymeren und Mischungen dieser. Verwendung finden auch kommerziell erhältliche Dispersionsmittel, beispielsweise von der Firma TEGO oder Byk, wie TEGO® Dispers, TEGO® VariPlus, TEGO® ViscoPlus, Bykumen®, Disperbyk®, BYK®, Anti-Terra® U, K-Sperse XD, Efka, Texaphor®.oder dergleichen. Besonders bevorzugt sind organisch modifizierte Metallalkoxide, wie 3-Methacryloxypropyltriethoxysilan (MPTES), 3-Methacryloxypropyltrimethoxysilan (MPTMS), 3-Glycidoxypropyltriethoxysilan (GPTES), 3-Glycidoxypropyltrimethoxysilan (GPTMS), Dynasylan VTMO, Isooctyltriethoxysilan oder 7-Octenyltrimethoxysilan, sowie kommerzielle Dipergieradditve der Firma Byk und TEGO. Es können auch Mischungen eingesetzt werden. Das Dispersionsmittel wird in der vorliegenden Erfindung auch als Dispergieradditiv bezeichnet, das die Verteilung der Glasfritte und/oder der Zusatzstoffe im Lösungsmittel unterstützt.

Erfindungsgemäß kann eine große Reihe an Lösungsmitteln zum Einsatz kommen. Zu berücksichtigende Faktoren sind beispielsweise die Lösungsmittelviskosität, Verdampfungsrate, Oberflächenspannung, Geruch und Toxizität. Geeigneter weise kann das Lösungsmittel ausgewählt werden aus Wasser, Alkoholen, Ethern, wie Glykolethern, Lactaten, Acetaten, Aldehyden, Ketonen, aromatischen Kohlenwasserstoffen, Ölen und Fettsäurederivaten. Es können auch kommerziell erhältliche Produkte eingesetzt werden, wie beispielsweise Lösungsmittel von Johnson Matthey (z.B. hochsiedende Anpastöle, wie JM 850-63 oder JM 650-63); Dowanol DB (Diethylenglykol-n-butylether von Dow Chemical) oder dergleichen. Mischungen von zwei oder mehreren dieser Verbindungen sind ebenfalls möglich. Bevorzugte Beispiele umfassen, sind aber nicht beschränkt auf Polyethylenglykol, Ethylenglykolmonobutylether, Dipropylenmonoglykolether, 1-Methoxy-2-Propanol und Diethylenglykol-n-butylether sowie kommerziell erhältliche Lösungsmittel. Die Glasfritte wird im Lösungsmittel dispergiert, es wird keine echte Lösung erhalten, sondern eine Dispersion. Die anderen Zusatzstoffe können, je nach ausgewählter Verbindung, gelöst oder dispergiert werden.

Zum Teil gehören Verbindungen sowohl zu den Dispersionsmitteln als auch den Lösungsmittel, da diese Verbindungen gleichermaßen beide Funktionen erfüllen können. Diese Verbindungen können hinsichtlich ihrer Funktion in der Tintenstrahldrucktinte jedoch unterschieden werden, da das Dispersionsmittel regelmäßig in deutlich kleinerer Menge in der Tinte enthalten ist als das Lösungsmittel.

Für den Binder kommen erfindungsgemäß beispielsweise folgende Verbindungen in Frage: Sol-Gel-Binder, hybridpolymere Sol-Gel-Binder, bevorzugt UV-vernetzende hybridpolymere Sol-Gel-Binder, Acrylharze, carboxylierte Acrylharze, Polyvinylpyrrolidon (PVP), Polyvinylbutyral, Kondensate aus Harnstoff und Aldehyden, Polyvinylharze, Celluloseacetatbutyrat, Cellulosederivate, Poly(meth)acrylate sowie kommerziell erhältlichen Binder und Mischungen dieser. Bevorzugt hiervon sind Sol-Gel Binder, hybridpolymere Sol-Gel-Binder, insbesondere UV-vernetzende hybridpolymere Sol-Gel-Binder, bevorzugt solche auf Basis von Silicium, Titan, Zirkonium oder Aluminium, Bisphenylglycidyldimethacrylate (BisGMA), Diurethandimethacrylat (UDMA) und Triethylenglykoldimethacrylat (TEGDMA). Insbesondere ein hybridpolymerer SiO₂-Binder, ganz besonders bevorzugt auf Basis von 3-Glycidoxypropyltriethoxysilanen (GPTES) und Tetraethoxyorthosilikat (TEOS), ist erfindungsgemäß besonders vorteilhaft. Ein Bindemittel wird erfindungsgemäß verwendet, damit die Strukturtreue und Schichtmorphologie der applizierten Tinte bis zum Aufschmelzen der Glasfritte erhalten bleibt, wodurch ein erheblicher Vorteil beim Tintenstrahldruckverfahren resultiert. Hierdurch wird das Drucken sehr feiner Linien überhaupt erst möglich. Das Bindemittel dient weiterhin dazu, die Kantenschärfe der aufgebrachten Tinte bis zum Aufschmelzen der Glasfritte sicherzustellen. Der Binder stellt einen Bestandteil der erhaltenen Schicht dar.

Erfindungsgemäß bevorzugt sind hybridpolymere Sol-Gel-Binder, besonders bevorzugt UV-vernetzende hybridpolymere Sol-Gel-Binder, insbesondere bevorzugt solche auf Basis von Silicium, Titan, Zirkonium oder Aluminium, ganz besonders bevorzugt auf Basis von 3-Glycidoxypropyltriethoxysilane (GPTES) und Tetraethoxyorthosilikat (TEOS). Bei hybridpolymeren Sol-Gel-Bindern handelt es sich um einen Sol-Gel-Vorstufe auf SiO₂ Basis, welche mit organischen Gruppen modifiziert wurden. Somit kann der Binder sowohl anorganisch, als auch organisch vernetzen und stellt somit ein hybridpolymeres Netzwerk dar. Sind die organischen Gruppen so gewählt, dass sie radikalisch polymerisieren, kann man durch Zugabe eines radikalischen Photoinitiators die Vernetzung durch eine Lichtquelle initiieren, die im Anregungsspektrum des Photoinitiator liegt. Dies hat den großen Vorteil, dass sich die Tinte direkt nach dem Aufbringen auf das Glas durch UV-Strahlung fixieren lässt. Dies ist theoretisch auch mit jedem anderen rein organischen Material möglich, dass radikalisch vernetzt, jedoch zersetzen sich diese organischen Komponenten beim Einbrennen der Tinte bei Temperaturen, bei denen die Glasfritte noch nicht aufgeschmolzen ist und ohne Binder schrumpft die Schicht und verliert ihre Struktur. Beim hybridpolymeren Binder verhindert dies die anorganische SiO₂-Komponente. Sie bleibt bis zum Aufschmelzen erhalten und wird dann ein Bestandteil der aufgeschmolzenen Emaille.

Eine erfindungsgemäß bevorzugte Ausführungsform der Tintenstrahldrucktinte umfasst daher einen UV-vernetzenden hybridpolymeren Sol-Gel-Binder und einen Photoinitiator. Durch die Verwendung eines UV-vernetzenden hybridpolymeren Sol-Gel-Binders ergibt sich die Möglichkeit, die Tinte mittels UV-Strahlung auszuhärten. Anders als bei einem rein organischen UV-härtbaren Polymer bleibt die anorganische Komponente des Binders jedoch in der applizierten Schicht enthalten und sorgt somit bis zum Aufschmelzen der Glasfritte für eine ausreichende Strukturtreue.

Selbstverständlich können auch weitere Additive in der keramischen Tinte enthalten sein, wie Füllstoffe, Benetzungsmittel, Photoinitiatoren, Entschäumer, Rheologiekontrollmittel, anti-korrosive Mittel, Verdampfungskontrollmittel, organische Polymere, insbesondere filmbildende Polymere, oberflächenaktive Mittel, Befeuchtungsmittel, Biozide, Puffer, Haftmittel bzw. Kleber, Lösungshilfsmittel, Netzmittel. Es können auch Mischungen von mehreren dieser Verbindungen eingesetzt werden. Die weiteren Additive sind im Rahmen der Erfindung nicht besonders beschränkt, sofern diese vom Glasfluss nicht oder nur geringfügig angegriffen werden.

Beispielhafte Additive sind: Füllstoffe, wie Petalit (LiAlSi₄O₁₀), Spodumen (LiAl-Si₂O₆), β-Eukryptit (LiAlSiO₄), Nioboxid (Nb₂O₅), Zinnoxid (SnO₂), Cordierit (Mg₂Al₄Si₅O₁₈), , Zirkon (ZrSiO₄), Quarzglas (SiO₂) und niedrigausdehnende Glaskeramiken aus dem Dreiphasensystem Li₂O-Al₂O₃-SiO₂ mit einem thermischen Ausdehnungskoeffizienten α im Temperaturbereich von 20 bis 300°C von weniger als 4,0 ppm/K (= 4 x10⁻⁶ K⁻¹), besonders bevorzugt < 3 ppm/K, insbesondere < 2 ppm/K.

Die Zusatzstoffe und gegebenenfalls zusätzlichen Additive werden in geeigneten vordefinierten Mengen zugesetzt; die Menge hängt vom beabsichtigten Anwendungsfall ab und ist dem Fachmann entweder bekannt oder durch einfache Optimierung leicht erhältlich.

Bevorzugt weist die keramische Glas- und/oder Glaskeramik-Tintenstrahldrucktinte die folgende Zusammensetzung auf oder besteht hieraus:

| | |
|---|---|
| Glasfritte | 3 - 35 Vol.-%, bevorzugt 4-35 Vol.-% |
| Pigment(en) | 0,1 -40 Vol.-%, bevorzugt 5-40 Vol-% |
| Lösungsmittel | 30 - 95 Vol-%, bevorzugt 30-85 Vol.-% |
| Binder(n) | 0,5 - 30 Vol-%, bevorzugt 1 - 30 Vol-% |
| Dispersionsmittel | 0,5 - 15 Vol-%, bevorzugt 1 - 15 Vol-% |

Gemäß einer Ausführungsform ist es bevorzugt, wenn die Tinte eine Zusammensetzung aufweist, in der die Summe aus Glasfritte und Pigment(en) < 30 Vol-%, bevorzugter 20 Vol-%, noch bevorzugter < 15 Vol-% beträgt.
Hierdurch können besonders bevorzugte Eigenschaften erhalten werden.

Bevorzugt ist auch eine Ausführungsform, bei der die keramische Glas- und/oder Glaskeramik-Tintenstrahldrucktinte die folgende Zusammensetzung aufweist oder besteht aus:

| | |
|---|---|
| Glasfritte | 15 - 35 Vol.-% |
| Pigment(en) | 15 - 40 Vol.-% |
| Lösungsmittel | 30 - 75 Vol-% |
| Binder(n) | 2 - 30 Vol-% |
| Dispersionsmittel | 2 - 15 Vol-%. |

Die Zusammensetzung ergibt insgesamt 100 Vol.-%.

Die keramische Tintenstrahldrucktinte oder keramische Tinte dient erfindungsgemäß zur Erzeugung einer eingebrannten keramischen Farbe als vollflächiger oder teilflächiger Auftrag, der farbig sein kann, also eine oder mehrere Farben aufweist (oder auch weiß), oder farblos sein kann, auf einem niedrigausdehnenden Glas- und/oder niedrigausdehenenden Glaskeramiksubstrat. Die eingebrannte keramische Tinte kann undurchsichtig, durchscheinend oder transparent sein. Übergänge zwischen den geschilderten Zuständen sind ebenfalls möglich. Es können ein oder mehrere keramische Tinten zum Einsatz kommen. Demnach können die eingebrannten keramischen Tinten als Glasuren oder Emailles zum Einsatz kommen.

Die erfindungsgemäße Tinte wird vorzugsweise mittels eines Tintenstrahldruckers auf ein Trägersubstrat aus niedrigausdehnendem Glas und/oder niedrigausdehnender Glaskeramik.aufgebracht. Die Verarbeitbarkeit der erfindungsgemäßen Tinte liegt bei Raumtemperatur (25 °C) und vorzugsweise nicht höher.

Bevorzugt weist die Tintenstrahldrucktinte eine Viskosität im Bereich von 4 bis 40 mPas (bei einer Temperatur von 45°C und einer Scherrate von 200s⁻¹), eine Oberflächenspannung im Bereich von 20 bis 45 mN/m, eine Dichte im Bereich von 1,1 bis 1,5 g/ml und eine elektrische Leitfähigkeit von kleiner als 100 µs/cm auf.

Die Einfärbung der Tinte erfolgt erfindungsgemäß daher über Pigmente, bevorzugt über Nanopigmente, insbesondere mit einer Partikelgrößenverteilung d₉₀ von < 3 µm, insbesondere d₉₀ < 1,5 µm, besonders bevorzugt 1 µm oder kleiner. Die Angabe "mit einer Partikelgrößenverteilung d₉₀" bedeutet, dass der Partikeldurchmesser von 90% der Teilchen dem angegebenen Wert entspricht. Die geringe Partikelgröße trägt dazu bei, dass die Pigmente nicht sedimentieren und den Druckkopf beim Tintenstrahldrucken nicht verstopfen.

Auch die Partikelgrößenverteilung d₉₀ der Glasfritte liegt erfindungsgemäß bei d₉₀ < 3 µm, insbesondere d₉₀ < 1,5 µm, besonders bevorzugt 1 µm oder kleiner. Ganz besonders bevorzugt wird die Partikelgrößenverteilung d₉₀ von Glasfritte und Pigment(en) gleich groß ausgewählt. Dadurch dass die Partikelgrößenverteilung d₉₀ von Glasfritte und Pigment(en) relativ klein ausgewählt wird und vorzugsweise im selben Größenordnungsbereich liegt, wird verhindert, dass der Druckkopf von den Partikeln abrasiv geschädigt wird.

Um erfindungsgemäß eine Tintenstrahldrucktinte bereitzustellen, die über eine entsprechende Langzeitstabilität verfügt und gleichzeitig mit geringer Abrasivität gegenüber dem Druckkopf wirkt, sind Partikelgrößen (d₉₀) für die Glasfritte und/oder Pigment(e) von deutlich < 1 µm besonders bevorzugt.

Das Trägersubstrat ist im Rahmen der Erfindung nicht besonders beschränkt, sofern es niedrigausdehnendes Glas und/ oder niedrigausdehnende Glaskeramik aufweist oder hieraus besteht. Es kann ein beliebiger Gegenstand nahezu beliebiger Form und Größe sein. Es kann auch ein zu biegendes oder bereits gebogenes Trägersubstrat verwendet werden. Das Material kann farblos transparent, transparent eingefärbt, transluzent, oder opak in den unterschiedlichsten Farben sein. Es kann auch nur bereichsweise verformt sein oder in einem nachfolgenden Schritt bereichsweise verformt werden. Es kann chemisch oder thermisch vorgespannt sein oder nachträglich vorgespannt werden. Die Gläser können vorher bearbeitet sein oder nachträglich nachbehandelt werden durch alle dem Fachmann bekannten glasbearbeitenden oder -behandelnden Verfahren, beispielsweise bohren, fräsen, schleifen, polieren, ätzen, reinigen, andere Beschichtungsverfahren, auch in mehrstufigen Prozessen, auch lokal begrenzt. Die Substrate können auch einseitig strukturiert sein, beidseitig strukturiert oder beidseitig glatt. Die Substrate können Dicken aufweisen von 20 µm - 20 mm, bevorzugt 350 µm - 10 mm, besonders bevorzugt 2- 6 mm.

Ganz besonders bevorzugt ist das niedrigausdehnende Glas auf Basis eines Borosilikatglases. Das Trägersubstrat kann vollständig oder teilweise aus Glas aufgebaut sein. Es kann vollständig oder nur teilweise mit der erfindungsgemäßen Tinte bedruckt werden. Vorzugsweise wird für das Trägersubstrat ein Material mit niedrigem thermischen Ausdehnungskoeffizienten α_{sub}) verwendet (hier bezeichnet als "niedrigausdehnend"). Bevorzugt liegt der thermische Ausdehnungskoeffizient α_{sub}) < 5,0 ppm/K, bevorzugter < 4,0 ppm/K und liegt ganz besonders bevorzugt im Bereich von etwa 2,0 bis etwa 4,5 ppm/K. Besonders bevorzugt als Material des Trägersubstrats ist Glaskeramik mit einem thermischen Ausdehnungskoeffizienten a< 2 ppm/K.

Bei einem Trägersubstrat in Form einer Glaskeramik kann das Einbrennen der Tinte beispielsweise während der Keramisierung durchgeführt werden. Die Glasfritte wird dann beispielsweise zusammen mit den vorhandenen Zusatzstoffen in Form der Tintenstrahldrucktinte durch Tintenstrahldruck direkt auf das Grünglas (zu keramisierendes Substratglas) aufgebracht und während des Keramisierungsverfahrens eingebrannt.

Die erfindungsgemäßen Tinten lassen sich vorzugsweise bei Einbrenntemperaturen < 1200 °C zu einer glatten Glas-Pigment-Komposit-Schicht oder Glasschicht aufschmelzen, wobei teilweise Kristallisationen des Glasanteils nicht ausgeschlossen sind, die einen für das niedrigausdehnende Glas und/oder die Glaskeramik geeigneten thermischen Ausdehnungskoeffizienten aufweist. Hierdurch kann der Spannungsaufbau zwischen der eingebrannten Tinte und dem Trägersubstrat kontrolliert werden. Die Rissbildung kann dadurch deutlich abgesenkt und die Biegezugfestigkeit wesentlich erhöht werden.

Die Glasfritte kann als, gegebenenfalls vorgefärbte, Basisfritte zur Herstellung keramischer Tinten, zum Beispiel schwarzer keramischer Tinte, für die Dekoration von Trägersubstraten Verwendung finden. Die erfindungsgemäßen Tinten ermöglichen je nach Auswahl der Glasflusszusammensetzung, wie oben in Einzelheiten beschrieben, ebenfalls eine kristallisierbare Glasfritte bereitzustellen, die als Basisfritte für die Dekoration eines Trägersubstrats verwendet werden kann. Die Kristallisation der Glasfritte verhindert z.B. ein Ankleben der keramischen Tinte beim Ablösen von der Form nach dem Formgebungsprozess (,antistick effect').

Der Begriff "Dekoration" soll erfindungsgemäß möglichst weit ausgelegt werden und bedeutet jede Möglichkeit, das Trägersubstrat mit einer keramischen Farbe zu versehen, zum Beispiel in Form einer Schicht, Teilschicht, (Teil-)Strukturierung Abbildung, Musterung, Beschriftung oder dergleichen. Es kann die Ober- und Unterseite wahlweise und kombiniert dekoriert werden. Die Dekoration kann aus rein ästhetischen Aspekten zur Erzielung eines gewünschten Designs und/ oder Färbung oder auch zur Darstellung bestimmter technischer Funktionen, beispielsweise für Markierungen oder zur Verhinderung des "Anklebens" an der Form im Formgebungsprozess, vorhanden sein.

Die keramische Tintenstrahldrucktinte für niedrigausdehnendes Glas und/oder niedrigausdehnende Glaskeramik kann durch ein Verfahren hergestellt werden, umfassend die Schritte:
- Bereitstellen einer Glasfritte durch Aufschmelzen einer Glaszusammensetzung bei einer Temperatur vorzugsweise im Bereich von 1000 bis 1600°C, Abschrecken der Schmelze und Mahlen des erhaltenen Materials, das gegebenenfalls vor dem Mahlen zumindest in einem Teil der flüssigen Zusatzstoffe, ausgewählt aus Dispersionsmittel und/oder Lösungsmittel, dispergiert wird; und
- Zugeben von Zusatzstoffen, ausgewählt aus Pigment(en), Dispersionsmittel, Lösungsmittel und Binder(n), vor, während und/oder nach dem Mahlen der Glasfritte, die gegebenenfalls vor dem Zugeben zumindest in einem Teil der flüssigen Zusatzstoffe, ausgewählt aus Dispersionsmittel und/oder Lösungsmittel, dispergiert werden, und Erhalt der Tintenstrahldrucktinte.

Zunächst wird eine Glasfritte, die die beschriebene Zusammensetzung aufweist oder hieraus besteht, bei einer Temperatur vorzugsweise im Bereich von 1000 bis 1600°C aufgeschmolzen, die Schmelze abgeschreckt und dann das erhaltene Material gemahlen, um ein Pulver zu erhalten. Die Glasfritte zum Erhalt des Pulvers wird dabei bevorzugt auf Partikelgrößen (d₉₀) < 3 µm, bevorzugter < 2 µm, noch bevorzugter < 1 µm gemahlen.

Die Zusatzstoffe, ausgewählt aus Pigment(en), Dispersionsmittel, Lösungsmittel und Binder(n) werden dann vor, während und/oder nach dem Mahlen der Glasfritte zugegeben und die erfindungsgemäße Tintenstrahldrucktinte erhalten. Bevorzugt werden die Zusatzstoffe nach dem Mahlen der Glasfritte zugegeben.

Nach einer bevorzugten Variante der Erfindung kann die Glasfritte nach einem Vormahlen in einem Teil der flüssigen Zusatzstoffe dispergiert und dann einer Feinmahlung unterzogen werden, um auf eine Partikelgröße (d₉₀) < 3 µm, bevorzugter < 2 µm, noch bevorzugter < 1 µm einzustellen.

Auch die festen Zusatzstoffe können in einem Teil der flüssigen Zusatzstoffe vordispergiert werden. Dann wird diese Vordispersion gemahlen und auf Partikelgrößen (d₉₀) < 3 µm, bevorzugter < 2 µm, noch bevorzugter < 1 µm gebracht. Diese Vordispersion wird dann zu der vordispergierten Glasfritte zugegeben und es wird gemischt. Bevorzugt wird die erhaltene Mischung gerührt, bis eine homogene Dispersion in Form der keramischen Tintenstrahldrucktinte erhalten wird.

Das in der keramischen Tinte vorhandene mindestens eine Dispersionsmittel und das mindestens eine Lösungsmittel dienen zum Bereitstellen der Tinte und Aufbringen der keramischen Tinte mittels Tintenstrahldruck auf das Trägersubstrat, werden aber beim Einbrennen regelmäßig verdampft. Der mindestens eine Binder und selbstverständlich auch das Pigment/die Pigmente bleiben nach dem Brennen in der entstandenen Glasschicht zumindest zum Teil erhalten.

Ein Verfahren zur Herstellung eines dekorierten Glas- und/oder Glaskeramik-Gegenstands unter Verwendung der keramischen Tintenstrahldrucktinte der vorliegenden Erfindung, umfassent die Schritte:
- Aufbringen der Tintenstrahldrucktinte auf ein Trägersubstrat, das niedrigausdehnende Glas und/oder niedrigausdehnende Glaskeramik aufweist oder hieraus besteht, mittels Tintenstrahldrucks und
- Einbrennen der Tintenstrahldrucktinte auf dem Trägersubstrat, wobei die Tinte während des Einbrennens zu einer glatten Glasschicht aufgeschmolzen wird, bei einer Einbrenntemperatur von vorzugsweise < 1200 °C, bevorzugter < 900 °C, noch bevorzugter < 850 °C, noch bevorzugter < 800 °C, insbesondere < 750 °C und bevorzugt einer Einbrennzeit im Bereich von 2 min bis 5 h, bevorzugter 5 min bis 1h, insbesondere bei 10 bis 15 min.

Zur Homogenisierung der Tinte können optional dem Fachmann bekannte Verfahren herangezogen werden, wie beispielsweise die Verwendung einer Hochgeschwindigkeitsspindel, ein Dreiwalzenstuhl und dergleichen.

Im Verfahren zur Herstellung eines dekorierten Glas- und/oder und Glaskeramik-Gegenstands wird die hergestellte Tintenstrahldrucktinte durch Tintenstrahldruck auf ein Trägersubstrat, das niedrigausdehnendes Glas und/oder niedrigausdehnende Glaskeramik aufweist oder hieraus besteht, aufgebracht. Anschließend erfolgt der Einbrennprozess, wobei die Glasfritte erweicht und einen Glasfluss auf der Trägersubstratoberfläche bildet, in dem die vorhandenen Zusatzstoffe eingebettet und auf dem Trägersubstrat fixiert werden.

Das in der Tintenstrahldrucktinte enthaltene Lösungsmittel verdampft regelmäßig beim Aufheizen lange bevor die Temperatur zum Aufschmelzen der Glasfritte erreicht wird.

Die Einbrenntemperatur zur Herstellung der Emaille beträgt vorzugsweise < 1200 °C, bevorzugter < 900°C, noch bevorzugter < 850°C, noch mehr bevorzugt < 800°C, insbesondere liegen die Einbrenntemperaturen bei längeren Einbrennzeiten von 15 Min., bevorzugt bei < 750 °C. Die Einbrennzeit liegt vorzugsweise im Bereich von 2 min bis 5 h, bevorzugter 5 min bis 1h, insbesondere bei 10 bis 15 min.

Gleichzeitig mit dem Einbrennen der keramischen Tinte kann, wenn dies erwünscht ist, ein Biegen des Trägersubstrats oder eines Teils hiervon durchgeführt werden. Das Biegen kann aber auch vor oder nach dem Einbrennen der Tinte durchgeführt werden.

Erfindungsgemäß weist die eingebrannte keramische Tinte eine Anpassung im thermischen Ausdehnungskoeffizienten CTE auf, wodurch die Tinte ohne weiteres auch auf ein Glaskeramiksubstrat aufgebracht werden kann.

Die Erfindung betrifft auch die Verwendung einer Tintenstrahldrucktinte zur Herstellung einer Dekoration für ein Trägersubstrat, enthalten oder bestehend aus niedrigausdehnendem Glas und/oder niedrigausdehnender Glaskeramik. In einer bevorzugten erfindungsgemäßen Ausführungsform werden die keramischen Tintenstrahldrucktinten zur Herstellung eines einfarbigen und/oder mehrfarbigen Dekors für Kochflächen, Bedienblenden , Backofenscheiben, Ofenscheiben oder Kaminsichtscheiben verwendet. Gemäß einer besonders bevorzugten Ausführungsform wird die Tintenstrahldrucktinte auf Glaskeramiksubstraten verwendet. Des Weiteren werden die erfindungsgemäßen keramischen Tintenstrahldrucktinten bevorzugt zur Herstellung von individuellen Markierungen und Dekoration von niedrigausdehnendem Glas und/oder niedrigausdehnenden Glaskeramiken verwendet.

Gegenstand der Erfindung ist auch ein Kochfeld, umfassend eine Dekoration unter Verwendung der erfindungsgemäßen keramischen Tintenstrahldrucktinte.

Die Vorteile der vorliegenden Erfindung sind außerordentlich vielschichtig:
So gelingt es erfindungsgemäß blei- und cadmiumfreie keramische Tintenstrahldrucktinte zur Bedruckung von niedrigausdehnendem Glas und/oder niedrigausdehnender Glaskeramik bereitzustellen, welche die geschilderten Nachteile des Standes der Technik vermeiden. Diese weisen eine geringere thermische Ausdehnung und niedrigeres Diffusionsvermögen im Vergleich mit bisher bekannten keramischen Tinten auf. Hieraus resultieren deutlich verringerte Spannungen zwischen keramischer Tinte und Trägersubstrat. Somit können höhere Biegezugfestigkeiten erreicht und ein Abplatzen der keramischen Tinte von Trägersubstraten, wie emaillierten Glas- oder Glaskeramikartikeln, vermieden werden.

Von besonderem Vorteil ist, wenn sowohl die Zusammensetzung der keramischen Tinte als auch das Material des Trägersubstrats derart ausgewählt werden, dass beide einen möglichst ähnlichen, niedrigen thermischen Ausdehnungskoeffizienten aufweisen. Hierdurch gelingt es, die geschilderten Probleme aus dem Stand der Technik völlig zu vermeiden.

Die erfindungsgemäßen Tinten sind blei- und cadmiumfrei und daher nicht umweltbelastend und erfordern keine besondere Abfall-Entsorgung.

Durch eine geeignete Pigmentierung der vorgefärbten Glasfritten lassen sich bereits mit niedrigen Pigmentgehalten schwarze keramische Tinten herstellen, die ein ausgezeichnetes Deckvermögen auf farblosem Glas oder Glaskeramik aufweisen.

Die keramischen Tinten sind für Dekorationen aller Art, beispielsweise auch großflächige Dekorationen, von niedrigausdehnendem Glas- und/oder niedrigausdehnenden Glaskeramik-Substraten geeignet. Sie eignet sich insbesondere auch für ein- oder mehrfarbiges Dekors für Kochflächen auf Glaskeramikbasis oder Kaminsichtscheiben. Vorteilhafterweise werden die Trägersubstrate aus Gläsern auf Borosilikatglas-Basis und/oder Glaskeramiken auf LAS- oder MAS-Basis ausgewählt.

Auch können ein- oder mehrere Schichten derselben oder von unterschiedlichen keramischen Tinten übereinander gedruckt werden.

Das Einbrennen der Glasfritte auf einem Trägersubstrat gelingt ohne Probleme bei Einbrenntemperaturen vorzugsweise < 1200 °C, bevorzugt < 1000°C.

Erfindungsgemäß können auch vorgefärbte und/oder kristallisierbare Glasfritten eingesetzt werden, die als Basisfritten für die Dekoration eines Trägersubstrats dienen. Die Kristallisation der Glasfritte verhindert ein Ankleben der keramischen Farbe beim Ablösen der Form nach dem Formgebungsprozess (,antistick effect').

Nachfolgend soll die vorliegende Erfindung anhand von Beispielen im Einzelnen näher erläutert werden, welche jedoch nur zur Veranschaulichung und keinesfalls als Begrenzung des Schutzumfangs verstanden werden sollen.

### Beispiele

### Beispiel 1:

### Weiße keramische Tintenstrahldrucktinte mit organischem Binder

Verwendet wird eine Glasfritte mit einer Zusammensetzung von 70 Gew.-% SiO₂, 13 Gew.-% Al₂O₃, 7 Gew.-% B₂O₃, 5 Gew.-% Na₂O, 2 Gew.-% MgO, 1 Gew.-% ZnO, 1,5 Gew.-% TiO₂ und 0,5 Gew.-% ZrO₂.

Die Glasfritte wird als Ribbon geschmolzen und anschließend grob vorgebrochen. Im Anschluß wird das Glas in einer Kugelmühle gemahlen. Diese Siebfraktion besitzt eine Partikelgrößenverteilung d₅₀ = 4 µm, gemessen an einem CILAS 1090L über das Messprinzip der Laserbeugung. Um auf die gewünschte Partikelgrößenverteilung d₉₀ von 180 nm zu gelangen, wird eine nachgeschaltete Feinmahlung durchgeführt. Hierzu wird aus Glaspulver und Ethanol eine Aufschlämmung hergestellt und dieser ein Dispergieradditiv, in diesem Fall Polyethylenglykol, zugesetzt. Die Feinmahlung wird als autogene Mahlung durchgeführt, d. h. die Mahlkugeln besitzen dieselbe Materialzusammensetzung wie das Mahlgut. Die tatsächlich erreichte Partikelgröße wird über das Messprinzip der dynamischen Lichtstreuung mit einem Delsa Nano C der Firma Beckman Coulter bestimmt. Nach dem Mahlen wird das Mahlgut in das Lösungsmittel JM 650-63 (Johnson Matthey) überführt. Dazu wird der gesamte Inhalt der Kugelmühle ohne die Mahlkugeln mit dem Lösungsmittel vermischt und das niedrigsiedende Ethanol mit Hilfe eines Rotationsverdampfers bei 40°C Wasserbadtemperatur und einem Druck von 80 mbar abgetrennt.

Das Rutil-haltige Weißpigment mit einer Partikelgrößenverteilung d₉₀ von 15 µm wird in eine Mischung aus Dowanol DB, Polyvinylpyrrolidon und TEGO® Dispers mit einem Rührwerk (Eurostar 20 digital, IKA) unter Verwendung eines Dissolverrührers (R 1303, IKA) bei einer Drehzahl von 25 min⁻¹ eingerührt und dann 10 min bei 1200 min⁻¹ dispergiert. Anschließend wird die so vordispergierte Mischung in einer Kugelmühle auf eine Partikelgrößenverteilung d₉₀ von 180 nm heruntergemahlen.

Zu der zuvor hergestellten Glaskomponente wird unter zu Hilfenahme des IKA-Rührwerks die Pigmentkomponente hinzugegeben und 2 min bei 1200 min⁻¹ durchmischt. Die genaue Endzusammensetzung der Tinte ist Tabelle 1 zu entnehmen.

**Tabelle 1: Tintenzusammensetzung von Beispiel 1 - Angaben in Volumen-%**

| Komponente | Funktion | Volumenanteil |
|---|---|---|
| Glasfritte | Glas | 22 |
| Rutil | Weißpigment | 18 |
| JM 850-63 (Johnson Matthey Corp.) | Lösungsmittel | 18 |
| Dowanol DB (Dow Chemical Company) | Lösungsmittel | 22 |
| Polyvinylpyrrolidon | Binder | 14 |
| Polyethylenglykol | Dispergieradditiv | 2,5 |
| TEGO® Dispers (Evonik Industries AG) | Dispergieradditiv | 3,5 |

Rutil ist ein TiO₂-basiertes Weißpigment.

JM 850-63 (Johnson Matthey Corp.) ist ein kommerziell erhältliches Anpastöl für Emaillen und besteht aus einem Gemisch von hochsiedenden organischen Lösungsmitteln.

Dowanol DB ist ein Diethyleneglykol-n-butylether und wird von der Firma Dow Chemicals vertrieben.

TEGO® Dispers (Evonik Industries AG) sind handelsübliche Dispergieradditive der Firma Evonik.

Die so hergestellte Tinte weist bei einer Scherrate von 2,5 s⁻¹ und einer Temperatur von 24 °C eine Viskosität von 20,5 mPas auf, welche mit einem DV-III+Ultra Digital Rheometer der Firma Brookfield bestimmt wurde. Die Oberflächenspannung der Tinte beträgt bei einer Temperatur von 24 °C 33 mN/m, gemessen mit einem Force Tensiometer K100 der Firma Krüss. Die Dichte der Tinte beträgt 1,5 g/ml (bestimmt über ein Pyknometer) und die elektrische Leitfähigkeit 78 µS/cm.

Die so hergestellte Tinte wird auf eine Lithium-Aluminium-Silikat-Glaskeramik (α< 2 ppm/K) durch Tintenstrahldruck aufgebracht und bei einer Temperatur von 1050 °C eingebrannt.

### Beispiel 2:

### Schwarze keramische Tintenstrahldrucktinte mit anorganischem Sol-Gel-Binder

Verwendet wird eine Glasfritte mit einer Zusammensetzung von 55 Gew.-% SiO₂, 13 Gew.-% Al₂O₃, 7 Gew.-% B₂O₃, 5 Gew.-% Na₂O, 2 Gew.-% MgO, 1 Gew.-% ZnO, 1,5 Gew.-% TiO₂ und 0,5 Gew.-% ZrO₂. Die hier zu 100 Gew.-% fehlenden 15 Gew.-% werden über einen anorganischen Sol-Gel-Binder auf SiO₂-Basis integriert.

Die Glaskomponente wird analog zu Ausführungsbeispiel 1 dargestellt.

Für den Sol-Gel-Binder werden 500 g Tetraethoxyorthosilikat (TEOS) in einem Rundkolben vorgelegt und unter Rühren eine Mischung aus 69 g Wasser und 10 g para-Toluolsulfonsäure (p-TSH) hinzugegeben und für eine Stunde weitergerührt. Anschließend wird das bei der Reaktion entstandene Ethanol am Rotationsverdampfer bei 40 °C Wasserbadtemperatur und einem Druck von 80 mbar abgetrennt.

Die Pigmentkomponente wird ebenfalls analog zu Ausführungsbeispiel 1 dargestellt, mit dem Unterschied, dass die Binderkomponente Polyvinylpyrrolidon durch den TEOS-basierten Sol-Gel-Binder ersetzt wird.

Zu der zuvor hergestellten Glaskomponente wird unter Zuhilfenahme des IKA-Rührwerks die Pigmentkomponente hinzugegeben und 2 min bei 1200 min⁻¹ durchmischt. Die genaue Endzusammensetzung der Tinte ist Tabelle 2 zu entnehmen.

**Tabelle 2: Tintenzusammensetzung von Beispiel 2 - Angaben in Volumen-%**

| Komponente | Funktion | Volumenanteil |
|---|---|---|
| Glasfritte | Glas | 22 |
| Kupfer-Chrom-Spinell | Schwarzpigment | 18 |
| JM 850-63 (Johnson Matthey Corp.) | Lösungsmittel | 18 |
| Dowanol DB | Lösungsmittel | 22 |
| TEOS-basierter Sol-Gel-Binder | Binder | 14 |
| Polyethylenglykol | Dispergieradditiv | 2,5 |
| TEGO® Dispers (Evonik Industries AG) | Dispergieradditiv | 3,5 |

Die so hergestellte Tinte weist bei einer Scherrate von 2,5 s⁻¹ und einer Temperatur von 24°C eine Viskosität von 38 mPas auf, welche mit einem DV-III+Ultra Digital Rheometer der Firma Brookfield bestimmt wurde. Die Oberflächenspannung der Tinte beträgt bei einer Temperatur von 24°C 22 mN/m, gemessen mit einem Force Tensiometer K100 der Firma Krüss. Die Dichte der Tinte beträgt 1,2 g/ml (bestimmt über ein Pyknometer) und die elektrische Leitfähigkeit 78 µS/cm.

### Beispiel 3:

### Graue keramische Tintenstrahldrucktinte mit hybridpolymerem Sol-Gel-Binder

Verwendet wird eine Glasfritte mit einer Zusammensetzung von 55 Gew.-% SiO₂, 13 Gew.-% Al₂O₃, 7 Gew.-% B₂O₃, 5 Gew.-% Na₂O, 2 Gew.-% MgO, 1 Gew.-% ZnO, 1,5 Gew.-% TiO₂ und 0,5 Gew.-% ZrO₂. Die hier zu 100 Gew.-% fehlenden 15 Gew.-% werden über einen anorganischen Sol-Gel-Binder auf SiO₂-Basis integriert.

Die Glaskomponente wird analog zu Ausführungsbeispiel 1 dargestellt.

Für den hybridpolymeren Binder werden 418 g 3-Glycidoxypropyltriethoxysilane (GPTES) und 78 g Tetraethoxyorthosilikat (TEOS) in einem Rundkolben vorgelegt und unter Rühren eine Mischung aus 43 g Wasser und 6 g para-Toluolsulfonsäure (p-TSH) hinzugegeben und für eine Stunde weitergerührt. Anschließend wird das bei der Reaktion entstandene Ethanol am Rotationsverdampfer bei 40°C Wasserbadtemperatur und einem Druck von 80 mbar abgetrennt.

Die Pigmentkomponente wird ebenfalls analog zu Ausführungsbeispiel 1 dargestellt, mit dem Unterschied, dass die Binderkomponente Polyvinylpyrrolidon durch den hybridpolymeren Sol-Gel-Binder ersetzt wird.

Zu der zuvor hergestellten Glaskomponente wird unter zu Hilfenahme des IKA-Rührwerks die Pigmentkomponente und als Photoinitiator Irgacure 819 hinzugegeben und 2 min bei 1200 min⁻¹ durchmischt. Der Photoinitiator sorgt dafür, dass die keramische Tintenstrahldrucktinte nach dem Applizieren auf Glas oder Glaskeramik mittels UV-Strahlung fixiert werden kann und so die Schichtdicke, die Schichtmorphologie und die Strukturtreue bis zum Aufschmelzen der Emaille erhalten bleibt.

Die genaue Endzusammensetzung der Tinte ist Tabelle 3 zu entnehmen.

**Tabelle 3: Tintenzusammensetzung von Beispiel 3 - Angaben in Volumen-%**

| Komponente | Funktion | Volumenanteil |
|---|---|---|
| Glasfritte | Glas | 22 |
| Rutil | Weißpigment | 9 |
| Kupfer-Chrom-Spinell | Schwarzpigment | 9 |
| JM 850-63 (Johnson Matthey Corp. | Lösungsmittel | 18 |
| Dowanol DB | Lösungsmittel | 20 |
| Hybridpolymerer Sol-Gel-Binder | Binder | 14 |
| Irgacure 819 | Photoinitiator | 2 |
| Polyethylenglykol | Dispergieradditiv | 2,5 |
| TEGO® Dispers (Evonik Industries AG) | Dispergieradditiv | 3,5 |

Die so hergestellte Tinte weist bei einer Scherrate von 2,5 s⁻¹ und einer Temperatur von 24°C eine Viskosität von 32 mPas auf, welche mit einem DV-III+Ultra Digital Rheometer der Firma Brookfield bestimmt wurde. Die Oberflächenspannung der Tinte beträgt bei einer Temperatur von 24°C 33 mN/m, gemessen mit einem Force Tensiometer K100 der Firma Krüss. Die Dichte der Tinte beträgt 1,1 g/ml (bestimmt über ein Pyknometer) und die elektrische Leitfähigkeit 85 µS/cm.

Die so hergestellte Tinte wird auf ein Lithium-Aluminium-Silikat-Glas durch Tintenstrahldruck aufgebracht und gleichzeitig mit der Keramisierung vom Substratglas zur Glaskeramik bei einer Temperatur von 850 °C eingebrannt.

### Beispiel 4:

### Schwarze, keramische Tintenstrahldrucktinte mit organischem Binder

Verwendet wird eine Glasfritte mit einer Zusammensetzung von 62 Gew.-% SiO₂, 14 Gew.-% Al₂O₃, 7 Gew.-% B₂O₃, 4 Gew.-% Li₂O, 1 Gew.-% MgO, 2 Gew.-% CaO, 2 Gew.-% ZnO, 0,5 Gew.-% K₂O, 4,5 Gew.-% SrO und 3 Gew.-% ZrO₂. α= 4,9 ppm/K.

Die Glaskomponente wird analog zu Ausführungsbeispiel 1 dargestellt.

Das Spinell-Pigment mit einer Partikelgrößenverteilung d₉₀ von 0,7 µm wird in eine Mischung aus Dowanol DB, Polyvinylpyrrolidon und TEGO® Dispers mit einem Rührwerk (Eurostar 20 digital, IKA) unter Verwendung eines Dissolverrührers (R 1303, IKA) bei einer Drehzahl von 25 min⁻¹ eingerührt und dann 10 min bei 1200 min⁻¹ dispergiert Anschließend wird die so vordispergierte Mischung in einer Kugelmühle auf eine Partikelgrößenverteilung d₉₀ von 180 nm heruntergemahlen.

Zu der zuvor hergestellten Glaskomponente wird unter Zuhilfenahme des IKA-Rührwerks die Pigmentkomponente hinzugegeben und 2 min bei 1200 min⁻¹ durchmischt.

Die genaue Endzusammensetzung der Tinte ist Tabelle 4 zu entnehmen.

**Tabelle 4: Tintenzusammensetzung von Beispiel 4 - Angaben in Volumen-%**

| Komponente | Funktion | Volumenanteil |
|---|---|---|
| Glasfritte | Glas | 15 |
| Co-Mn-Fe-Cr-Spinell | Schwarzpigment | 15 |
| JM 850-63 (Johnson Matthey Corp. | Lösungsmittel | 25 |
| Dowanol DB | Lösungsmittel | 21,5 |
| Hybridpolymerer Sol-Gel-Binder | Binder | 20 |
| TEGO® Dispers (Evonik Industries AG) | Dispergieradditiv | 3,5 |

Die so hergestellte Tinte wird auf eine transparente Lithium-Aluminium-Silikat-Glaskeramik (α< 2 ppm/K) durch Tintenstrahldruck aufgebracht und bei einer Temperatur von 750 °C eingebrannt

Verwendet wird eine Glasfritte mit einer Zusammensetzung von 56 Gew.-% SiO₂, 3 Gew.-% Al₂O₃, 4 Gew.-% B₂O₃, 2 Gew.-% Na₂O, 1 Gew.-% CaO, 19 Gew.-% Bi₂O₃, 2,5 Gew.-% Li₂O, 10 Gew.-% K₂O und 2,5 Gew.-% ZrO₂.

Die Glaskomponente wird analog zu Ausführungsbeispiel 1 dargestellt.

Das Rutil-haltige Pigment mit einer Partikelgrößenverteilung d₉₀ von 0,6 µm wird in eine Mischung aus Dowanol DB, Polyvinylpyrrolidon und TEGO® Dispers mit einem Rührwerk (Eurostar 20 digital, IKA) unter Verwendung eines Dissolverrührers (R 1303, IKA) bei einer Drehzahl von 25 min⁻¹ eingerührt und dann 10 min bei 1200 min⁻¹ dispergiert. Anschließend wird die so vordispergierte Mischung in einer Kugelmühle auf eine Partikelgrößenverteilung d₉₀ von 180 nm heruntergemahlen.

Zu der zuvor hergestellten Glaskomponente wird unter Zuhilfenahme des IKA-Rührwerks die Pigmentkomponente hinzugegeben und 2 min bei 1200 min⁻¹ durchmischt.

Die genaue Endzusammensetzung der Tinte ist Tabelle 5 zu entnehmen.

**Tabelle 5: Tintenzusammensetzung von Beispiel 5 - Angaben in Volumen-%**

| Komponente | Funktion | Volumenanteil |
|---|---|---|
| Glasfritte | Glas | 20 |
| Rutil | Weißpigment | 10 |
| JM 850-63 (Johnson Matthey Corp.) | Lösungsmittel | 45 |
| Hybridpolymerer Sol-Gel-Binder | Binder | 20 |
| Polyethylenglykol | Dispergieradditiv | 5 |

Die so hergestellte Tinte wird auf eine Borosilikatglasscheibe (α= 3,4 ppm/K) durch Tintenstrahldruck aufgebracht und bei einer Temperatur von 750 °C für 15 min eingebrannt.

## Patentansprüche

1. Keramische Tintenstrahldrucktinte für niedrigausdehnendes Glas und/oder niedrigausdehnende Glaskeramik als Trägersubstrat, wobei das Trägersubstrat einen thermischen Ausdehnungskoeffizienten α_{sub} von < 5,0 ppm/K aufweist, umfassend mindestens eine blei- und cadmiumfreie Glasfritte, mindestens ein Pigment, mindestens ein Dispersionsmittel, mindestens ein Lösungsmittel und mindestens einen Binder, wobei die Glasfritte die nachfolgende Zusammensetzung aufweist:
45 - 85 Gew.% SiO₂
2 - 20 Gew.-% Al₂O₃
0 - 23 Gew.-%, bevorzugt 0 - 18 Gew.-% B₂O₃
0 Gew.-% Bi₂O₃
0 - 15 Gew.-%, bevorzugter 1 - 15 Gew.-%, noch bevorzugter 1 - 9 Gew.-% Alkalioxide
0 - 18 Gew.-% Erdalkalioxide
0 - 7 Gew.-% ZnO
0 - 3 Gew.-% TiO₂
0 - 5 Gew.-% ZrO₂
0 - 2 Gew.-% Halogenide,
wobei eine möglichst geringe Differenz Δα = α - α_{sub} zwischen dem thermischen Ausdehnungskoeffizienten α der Glasfritte und dem thermischen Ausdehnungskoeffizienten α_{sub} des Trägersubstrats in Form von niedrigausdehnendem Glas und/oder niedrigausdehnender Glaskeramik vorliegt,
wobei die Glasfritte bevorzugt einen thermischen Ausdehnungskoeffizienten von α < 6 ppm/K aufweist, und
bevorzugt Δα < 6 ppm/K, insbesondere bevorzugt Δα < 4 ppm/K, ganz besonders bevorzugt Δα < 3 ppm/K beträgt.

2. Tinte nach Anspruch 1,
**dadurch gekennzeichnet, dass**
das Pigment ausgewählt ist aus der Gruppe der farbigen und farblosen anorganischen oxidischen Verbindungen,
bevorzugt aus Oxiden und/oder Spinellen, insbesondere Titanoxid (TiO₂), Ceroxid, Baddeleyit (ZrO₂), Cobalt-Oxiden / -Spinellen, wie Cobalt-Aluminium-Spinellen, Cobalt-Titan-Spinellen, Cobalt-Chrom-Spinellen, Cobalt-Nickel-Mangan-Eisen-Chrom-Oxiden /-Spinellen, Cobalt-Nickel-Zink-Titan-Aluminium-Oxiden /-Spinellen, Eisen-Oxiden, Eisen-Chrom-Oxiden, wie dotiertem Hämatit (Fe₂O₃ : Cr), Eisen-Chrom-Zinn-Titan-Oxiden, Kupfer-Chrom-Spinellen, wie CuCr₂O₄, Nickel-Chrom-Antimon-Titan-Oxiden, Titan-Oxiden, Zirkon-Silizium-Eisen-Oxiden /-Spinellen, wie dotiertem Zirkon (ZrSiO₄: Pr, V, Fe)),
Absorptionspigmenten, insbesondere plättchen- oder stäbchenförmigen Absorptionspigmenten,
Effektpigmenten, insbesondere beschichteten Effektpigmenten,
und Mischungen dieser.

3. Tinte nach mindestens einem der vorangehenden Ansprüche,
**dadurch gekennzeichnet, dass**
die Glasfritte und/oder das Pigment/die Pigmente eine Partikelgrößenverteilung d₉₀ von < 3 µm, insbesondere d₉₀ < 1,5 µm, besonders bevorzugt 1 µm oder kleiner, aufweisen.

4. Tinte nach mindestens einem der vorangehenden Ansprüche,
**dadurch gekennzeichnet, dass**
die Glasfritte eine Transformationstemperatur Tg im Bereich von 450 bis 700°C und einen Erweichungspunkt im Bereich von 500 bis 900°C aufweist und
die Tinte vorzugsweise eine Viskosität im Bereich von 4 bis 40 mPas (bei einer Temperatur von 45°C und einer Scherrate von 200s⁻¹), eine Oberflächenspannung im Bereich von 20 bis 45 mN/m, eine Dichte im Bereich von 1,1 bis 1,5 g/ml und eine elektrische Leitfähigkeit < 100 µS/cm aufweist.

5. Tinte nach mindestens einem der vorangehenden Ansprüche,
**dadurch gekennzeichnet, dass** eine möglichst geringe Differenz Δ α zwischen dem thermischen Ausdehnungskoeffizienten der Glasfritte (a) und dem thermischen Ausdehnungskoeffizienten des niedrigausdehnenden Glas und/oder der niedrigausdehnenden Glaskeramik (α_{sub}) vorliegt, wobei Δα im Bereich von 2 bis 4,5 ppm/K liegt.

6. Tinte nach mindestens einem der vorangehenden Ansprüche,
**dadurch gekennzeichnet, dass**
die eingebrannte Tinte aufgrund einer geringen Differenz Δα zwischen dem thermischen Ausdehnungskoeffizienten der eingebrannten keramischen Tinte und dem thermischen Ausdehnungskoeffizienten des niedrigausdehnenden Glas und/oder der niedrigausdehnenden Glaskeramik im Wesentlichen keine Risse, insbesondere keine Krakelee-Risse, bei Dekorationsdicken von > 2,5 µm im eingebrannten Zustand aufweist, wobei das Glas und/oder die Glaskeramik einen niedrigen Ausdehnungskoeffizienten (α_{sub}) von < 3,4 ppm/K aufweist.

7. Tinte nach mindestens einem der vorangehenden Ansprüche,
**dadurch gekennzeichnet,**
**dass** die Tinte eine Zusammensetzung aufweist oder besteht aus:
| | |
|---|---|
| Glasfritte | 3 - 35 Vol.-% |
| Pigment(en) | 0,1 -40 Vol.-% |
| Lösungsmittel | 30 - 95 Vol-% |
| Binder(n) | 0,5 - 30 Vol-% |
| Dispersionsmittel | 0,5 - 15 Vol-%. |

8. Tinte nach mindestens einem der vorangehenden Ansprüche 1 bis 6, **dadurch gekennzeichnet,**
**dass** die Tinte eine Zusammensetzung aufweist oder besteht aus:
| | |
|---|---|
| Glasfritte | 15 - 35 Vol.-% |
| Pigment(en) | 15 - 40 Vol.-% |
| Lösungsmittel | 30 - 75 Vol-% |
| Binder(n) | 2 - 30 Vol-% |
| Dispersionsmittel | 2 - 15 Vol-%. |

9. Tinte nach mindestens einem der vorangehenden Ansprüche 1 bis 7,
**dadurch gekennzeichnet,**
**dass** die Tinte eine Zusammensetzung aufweist, in der die Summe aus Glasfritte und Pigment(en) < 30 Vol-%, bevorzugter < 20 Vol-%, noch bevorzugter < 15 Vol-% beträgt.

10. Verwendung einer Tintenstrahldrucktinte nach einem der Ansprüche 1 bis 9 zur Herstellung einer Dekoration für ein Trägersubstrat, enthaltend oder bestehend aus niedrigausdehnendem Glas und/oder niedrigausdehnender Glaskeramik, bevorzugt für ein Trägersubstrat aus Glaskeramik, ganz besonders bevorzugt ein Kochfeld, eine Backofentür, eine Bedienblende oder eine Kaminsichtscheibe.

11. Verwendung einer Glasfritte zum Bedrucken eines Trägersubstrats, enthaltend oder bestehend aus niedrigausdehnendem Glas und/oder niedrigausdehnender Glaskeramik durch Tintenstrahldruck, wobei das Trägersubstrat einen thermischen Ausdehnungskoeffizienten α_{sub} von < 5,0 ppm/K aufweist und die Glasfritte folgende Zusammensetzung umfasst:
45 - 85 Gew.% SiO₂
2 - 20 Gew.-% Al₂O₃
0 - 23 Gew.-%, bevorzugt 0 - 18 Gew.-% B₂O₃
0 Gew.-% Bi₂O₃
0 - 15 Gew.-%, bevorzugter 1 - 15 Gew.-%, noch bevorzugter 1 - 9 Gew.-% Alkalioxide
0 - 18 Gew.-% Erdalkalioxide
0 - 7 Gew.-% ZnO
0 - 3 Gew.-% TiO₂
0 - 5 Gew.-% ZrO₂
0 - 2 Gew.-% Halogenide,
wobei eine möglichst geringe Differenz Δα = α - α_{sub} zwischen dem thermischen Ausdehnungskoeffizienten α der Glasfritte und dem thermischen Ausdehnungskoeffizienten α_{sub} des Trägersubstrats in Form von niedrigausdehnendem Glas und/oder niedrigausdehnender Glaskeramik vorliegt,
wobei die Glasfritte bevorzugt einen thermischen Ausdehnungskoeffizienten von α < 6 ppm/K aufweist, und bevorzugt Δα < 6 ppm/K, insbesondere bevorzugt Δα < 4 ppm/K, ganz besonders bevorzugt Δα < 3 ppm/K beträgt.

## Claims

1. Ceramic ink-jet printing ink for low-expansion glass and/or low-expansion glass ceramic as a carrier substrate, wherein the carrier substrate has a thermal expansion coefficient α_{sub} of < 5.0 ppm/K, comprising at least one lead- and cadmium-free glass frit, at least one pigment, at least one dispersant, at least one solvent, and at least one binder, wherein the glass frit has the following composition:
45-85 wt.-% SiO₂
2-20 wt.-% Al₂O₃
0-23 wt.-%, preferably 0-18 wt.-% B₂O₃
0 wt.-% Bi₂O₃
0-15 wt.-%, preferably 1-15 wt.-%, more preferably 1-9 wt.-% alkali oxides
0-18 wt.-% alkaline earth oxides
0-7 wt.-% ZnO
0-3 wt.-% TiO₂
0-5 wt.-% ZrO₂
0-2 wt.-% halides
wherein a smallest possible difference Δα = α-α_{sub} is present between the thermal expansion coefficient α of the glass frit and the thermal expansion coefficient α_{sub} of the carrier substrate in the form of low-expansion glass and/or low-expansion glass ceramic, wherein the glass frit preferably has a thermal expansion coefficient of α < 6 ppm/K, and
preferably Δα < 6 ppm/K, particularly preferably Δα < 4 ppm/K, more particularly preferably Δα < 3 ppm/K.

2. Ink according to claim 1, **characterized in that** the pigment is selected from the group of colored and colorless inorganic oxide compounds,
preferably of oxides and/or spinels, in particular titanium oxide (TiO₂), cerium oxide, baddeleyite (ZrO₂), cobalt oxides/spinels, such as cobalt-aluminum spinels, cobalt-titanium spinels, cobalt-chromium spinels, cobalt-nickel-manganese-iron-chromium oxides/spinels, cobalt-nickel-zinc-titanium-aluminum oxides/spinels, iron oxides, iron-chromium oxides such as doped hematite (Fe₂O₃:Cr), iron-chromium-tin-titanium oxides, copper-chromium spinels such as CuCr₂O₄, nickel-chromium-antimony-titanium oxides, titanium oxides, zirconium-silicon-iron oxides/spinels, such as doped zirconium (ZrSiO₄:Pr, V, Fe)),
absorption pigments , in particular platelet-shaped or rod-shaped absorption pigments,
effect pigments, in particular coated effect pigments, and mixtures thereof.

3. Ink according to at least one of the preceding claims, **characterized in that** the glass frit and/or the pigment(s) have a particle size distribution d₉₀ of < 3 µm, in particular d₉₀ of < 1.5 µm, more preferably 1 µm or less.

4. Ink according to at least one of the preceding claims, **characterized in that** the glass frit has a transformation temperature Tg in the range from 450 to 700°C and a softening point in the range from 500 to 900°C
and
the ink preferably has a viscosity in the range from 4 to 40 mPas (at a temperature of 45°C and a shear rate of 200s⁻¹), a surface tension in the range of 20 to 45 mN/m, a density in the range of 1.1 to 1.5 g/ml and an electrical conductivity <100 µS/cm.

5. Ink according to at least one of the preceding claims, **characterized in that** a smallest possible difference Δα between the coefficient of thermal expansion of the glass frit (α) and the thermal expansion coefficient of the low-expansion glass and/or the low-expansion glass ceramic (α_{sub}) is present, wherein Δα lies in the range from 2 to 4.5 ppm/K.

6. Ink according to at least one of the preceding claims, **characterized in that** the baked ink has substantially no cracks, in particular no crackles, due to a small difference Δα between the thermal expansion coefficient of the baked ceramic ink and the thermal expansion coefficient of the low-expansion glass and/or the low-expansion glass ceramic, at decoration thicknesses of > 2.5 µm in the baked state, wherein the glass and/or the glass ceramic has a low expansion coefficient (α_{sub}) of < 3.4 ppm/K.

7. Ink according to at least one of the preceding claims, **characterized in that** the ink has a composition or consists of:
| | |
|---|---|
| glass frit | 3-35 vol.% |
| pigment(s) | 0.1-40 vol.% |
| solvent | 30-95 vol.% |
| binder(s) | 0.5-30 vol.% |
| dispersant | 0.5-15 vol.%. |

8. Ink according to at least one of the preceding claims 1 to 6, **characterized in that** the ink has a composition or consists of:
| | |
|---|---|
| glass frit | 15-35 vol.% |
| pigment(s) | 15-40 vol.% |
| solvent | 30-75 vol.% |
| binder(s) | 2-30 vol.% |
| dispersant | 2-15 vol.%. |

9. Ink according to at least one of the preceding claims 1 to 7,
**characterized in that**
the ink has a composition in which the sum of glass frit and pigment(s) is < 30 vol.%, more preferably < 20 vol.%, even more preferably < 15 vol.%.

10. Use of an ink-jet printing ink according to one of the claims 1 to 9 for producing a decoration for a carrier substrate, comprising or consisting of low-expansion glass and/or low-expansion glass ceramic, preferably for a glass ceramic carrier substrate, more particularly preferably a hob, an oven door, a control panel or a viewing window for an oven.

11. Use of a glass frit for printing on a carrier substrate, comprising or consisting of low-expansion glass and/or low-expansion glass ceramic by ink-jet printing, wherein the carrier substrate has a thermal expansion coefficient α_{sub} of < 5.0 ppm/K and the glass frit has the following composition:
45-85 wt.-% SiO₂
2-20 wt.-% Al₂O₃
0-23 wt.-%, preferably 0-18 wt.-% B₂O₃
0 wt.-% Bi₂O₃
0-15 wt.-%, preferably 1-15 wt.-%, more preferably 1-9 wt.-% alkali oxides
0-18 wt.-% alkaline earth oxides
0-7 wt.-% ZnO
0-3 wt.-% TiO₂
0-5 wt.-% ZrO₂
0-2 wt.-% halides
wherein a smallest possible difference Δα = α-α_{sub} is present between the thermal expansion coefficient α of the glass frit and the thermal expansion coefficient α_{sub} of the carrier substrate in the form of low-expansion glass and/or low-expansion glass ceramic,
wherein the glass frit preferably has a thermal expansion coefficient of α < 6 ppm/K, and
preferably Δα < 6 ppm/K, particularly preferably Δα < 4 ppm/K, more particularly preferably Δα < 3 ppm/K.

## Revendications

1. Encre céramique pour impression par jet d'encre sur un substrat en verre à faible dilatation et/ou en vitrocéramique à faible dilatation, lequel substrat présente un coefficient de dilatation thermique α_{sub} inférieur à 5,0 ppm/K, comprenant au moins une fritte de verre sans plomb et sans cadmium, au moins un pigment, au moins un agent dispersant, au moins un solvant et au moins un liant, la fritte de verre présentant la composition suivante :
entre 45 et 85 % en poids de SiO₂
entre 2 et 20 % en poids d'Al₂O₃
entre 0 et 23 % en poids, de préférence entre 0 et 18 % en poids de B₂O₃ 0 % en poids de Bi₂O₃
entre 0 et 15 % en poids, de préférence entre 1 et 15 % en poids, mieux encore entre 1 et 9 % en poids d'oxydes de métaux alcalins entre 0 et 18 % en poids d'oxydes de métaux alcalinoterreux entre 0 et 7 % en poids de ZnO
entre 0 et 3 % en poids de TiO₂
entre 0 et 5 % en poids de ZrO₂
entre 0 et 2 % en poids d'halogénures,
la différence Δα = α - α_{sub} entre le coefficient de dilatation thermique α de la fritte de verre et le coefficient de dilatation thermique α_{sub} du substrat en verre à faible dilatation et/ou en vitrocéramique à faible dilatation étant aussi réduite que possible,
la fritte de verre présentant de préférence un coefficient de dilatation thermique α < 6 ppm/K, et
la valeur de la différence étant de préférence de Δα < 6 ppm/K, en particulier de Δα < 4 ppm/K, tout particulièrement de Δα < 3 ppm/K.

2. Encre selon la revendication 1, **caractérisée en ce que** le pigment est choisi dans le groupe des composés d'oxydes inorganiques colorés et incolores, de préférence parmi des oxydes et/ou des spinelles, en particulier l'oxyde de titane (TiO₂), l'oxyde de cérium, la baddeleyite (ZrO₂), les oxydes et spinelles de cobalt tels que les spinelles de cobalt et d'aluminium, les spinelles de cobalt et de titane, les spinelles de cobalt et de chrome, les oxydes et spinelles de cobalt-nickel-manganèse-fer-chrome, les oxydes et spinelles de cobalt-nickel-zinc-titane-aluminium, les oxydes de fer, les oxydes de fer et de chrome tels que l'hématite dopée (Fe₂O₃ : Cr), les oxydes de fer-chrome-étain-titane, les spinelles de cuivre et chrome tels que CuCr₂O₄, les oxydes de nickel-chrome-antimoine-titane, les oxydes de titane, les oxydes et spinelles de zirconium-silicium-fer tels que la zircone dopée (ZrSiO₄: Pr,V,Fe),
des pigments à absorption, en particulier des pigments à absorption en forme de plaquettes ou de bâtonnets,
des pigments à effet, en particulier des pigments à effet revêtus,
et des mélanges de ceux-ci.

3. Encre selon l'une au moins des revendications précédentes, **caractérisée en ce que** la fritte de verre et/ou le ou les pigments présentent une distribution de tailles de particules d₉₀ de moins de 3 µm, en particulier d₉₀ < 1,5 µm, de préférence de 1 µm ou moins.

4. Encre selon l'une au moins des revendications précédentes, **caractérisée en ce que** la fritte de verre présente une température de transformation Tg comprise entre 450 et 700 °C et un point de ramollissement compris entre 500 et 900 °C et
l'encre présente de préférence une viscosité comprise entre 4 et 40 mPa.s (à une température de 45 °C et un taux de cisaillement de 200 s⁻¹), une tension superficielle comprise entre 20 à 45 mN/m, une masse volumique comprise entre 1,1 et 1,5 g/ml et une conductivité électrique inférieure à 100 µS/cm.

5. Encre selon l'une au moins des revendications précédentes, **caractérisée en ce que** la différence Δα entre le coefficient de dilatation thermique de la fritte de verre (a) et le coefficient de dilatation thermique du substrat en verre à faible dilatation et/ou en vitrocéramique à faible dilatation (α_{sub}) est aussi réduite que possible, Δα étant comprise entre 2 et 4,5 ppm/K.

6. Encre selon l'une au moins des revendications précédentes, **caractérisée en ce qu'**en raison d'une faible différence Δα entre le coefficient de dilatation thermique de la fritte de verre et celui du substrat en verre à faible dilatation et/ou en vitrocéramique à faible dilatation, l'encre cuite ne présente pour l'essentiel pas de fissures, en particulier pas de craquelures, après cuisson à des épaisseurs de décor supérieures à 2,5 µm, le verre et/ou la vitrocéramique ayant un faible coefficient de dilatation thermique (α_{sub}), inférieur à 3,4 ppm/K.

7. Encre selon l'une au moins des revendications précédentes, **caractérisée en ce que** l'encre présente la composition suivante ou se compose de :
| | |
|---|---|
| fritte de verre | entre 3 et 35 % en volume |
| pigment(s) | entre 0,1 et 40 % en volume |
| solvant(s) | entre 30 et 95 % en volume |
| liant(s) | entre 0,5 et 30 % en volume |
| agent(s) dispersant(s) | entre 0,5 et 15 % en volume. |

8. Encre selon l'une au moins des revendications 1 à 6, **caractérisée en ce que** l'encre présente la composition suivante ou se compose de :
| | |
|---|---|
| fritte de verre | entre 15 et 35 % en volume |
| pigment(s) | entre 15 et 40 % en volume |
| solvant(s) | entre 30 et 75 % en volume |
| liant(s) | entre 2 et 30 % en volume |
| agent(s) dispersant(s) | entre 2 et 15 % en volume. |

9. Encre selon l'une au moins des revendications 1 à 7, **caractérisée en ce qu'**elle présente une composition dans laquelle la somme de la fritte de verre et du ou des pigments représente moins de 30 % en volume, de préférence moins de 20 % en volume, et en particulier moins de 15 % en volume.

10. Utilisation d'une encre pour impression par jet d'encre selon l'une des revendications 1 à 9 pour créer un décor sur un substrat contenant ou se composant de verre à faible dilatation et/ou de vitrocéramique à faible dilatation, de préférence un substrat en vitrocéramique, en particulier une plaque de cuisson, une porte de four de cuisine, un bandeau de commande ou une vitre d'insert de cheminée.

11. Utilisation d'une fritte de verre pour l'impression sur un substrat en verre contenant ou se composant de verre à faible dilatation et/ou de vitrocéramique à faible dilatation par impression par jet d'encre, le substrat présentant un coefficient de dilatation thermique α_{sub} inférieur à 5,0 ppm/K et la fritte de verre présentant la composition suivante :
entre 45 et 85 % en poids de SiO₂
entre 2 et 20 % en poids d'Al₂O₃
entre 0 et 23 % en poids, de préférence entre 0 et 18 % en poids de B₂O₃ 0 % en poids de Bi₂O₃
entre 0 et 15 % en poids, de préférence entre 1 et 15 % en poids, mieux encore entre 1 et 9 % en poids d'oxydes de métaux alcalins entre 0 et 18 % en poids d'oxydes de métaux alcalinoterreux entre 0 et 7 % en poids de ZnO
entre 0 et 3 % en poids de TiO₂
entre 0 et 5 % en poids de ZrO₂
entre 0 et 2 % en poids d'halogénures,
la différence Δα = α - α_{sub} entre le coefficient de dilatation thermique α de la fritte de verre et le coefficient de dilatation thermique α_{sub} du substrat en verre à faible dilatation et/ou en vitrocéramique à faible dilatation étant aussi réduite que possible,
la fritte de verre présentant de préférence un coefficient de dilatation thermique α < 6 ppm/K, et
la valeur de la différence étant de préférence de Δα < 6 ppm/K, en particulier de Δα < 4 ppm/K, tout particulièrement de Δα < 3 ppm/K.
